# EUROPEAN PATENT APPLICATION

(11) **EP 4 811 880 A1**
(43) Date of publication of application: **23.09.2026**
(21) Application number: 24916103.5
(22) Date of filing: 12.01.2024
(51) Int. Cl.: H04W 52/02, H04W 36/08

(54) **CELL COMMUNICATION METHOD AND APPARATUS, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); YU, Xinlei, Dongguan, Guangdong 523860 (CN)
(74) Representative: Grassi, Stefano
(86) International application number: PCT/CN2024/072137
(87) International publication number: WO 2025/148039

(57) **Abstract**

A cell communication method and apparatus, a device, and a medium, relating to the field of wireless communications. The method is applied to a terminal, and comprises: sending an uplink request signal, or determining whether to send an uplink request signal, the uplink request signal being used for requesting to acquire common information of a first cell (210). The method provides a working method of a terminal in a network energy-saving cell.

## Description

### TECHNICAL FIELD

The present disclosure relates to the field of wireless communications, and in particular, to a method and apparatus for cell communication method, device, and medium.

### BACKGROUND ART

Energy consumption has become an important component of operators' operating costs. According to a report by the Global System for Mobile Communications Association (GSMA), the energy cost of mobile networks accounts for approximately 23% of operators' total costs. Most of the energy consumption comes from the radio access network, while data centers and fiber optic transmission account for a smaller share.

In order to reduce network energy consumption, some cells do not send or do not actively send System Information Block 1 (SIB1). How a terminal works in such a cell is an issue that needs to be solved urgently.

### SUMMARY

Embodiments of the present disclosure provide a method and apparatus for cell communication, device, and medium. The technical solution is as follows.

According to an aspect of the present disclosure, a method for cell communication is provided, the method is performed by a terminal, and the method includes:
sending an uplink request signal, or determining whether to send the uplink request signal, wherein the uplink request signal is used to request acquisition of public information of a first cell.

According to an aspect of the present disclosure, a method for cell communication is provided, the method is performed by a terminal, and the method includes:
receiving first information of the first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

According to an aspect of the present disclosure, a method for cell communication is provided, the method is performed by an access network device of a first cell, and the method includes:
receiving an uplink request signal, wherein the uplink request signal is used to request acquisition of public information of the first cell.

According to an aspect of the present disclosure, a cell communication apparatus is provided, the apparatus includes:
sending first information;
wherein the first information is used to indicate at least one of: a cell state transition of the first cell; the first cell does not send public information; the first cell transitions to not sending the public information; the first cell transitions to an inactive state; or the first cell transitions to an energy-saving state.

According to an aspect of the present disclosure, a cell communication apparatus is provided, the apparatus includes:
a first sending module, configured to send an uplink request signal, or
a first processing module, configured to determine whether to send the uplink request signal, wherein the uplink request signal is used to request acquisition of public information of a first cell.

According to an aspect of the present disclosure, a cell communication apparatus is provided, the apparatus includes:
a second receiving module, configured to receive first information of the first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

According to an aspect of the present disclosure, a cell communication apparatus is provided, the apparatus includes:
a third receiving module, configured to receive an uplink request signal, wherein the uplink request signal is used to request acquisition of public information of a first cell.

According to an aspect of the present disclosure, a cell communication apparatus is provided, the apparatus includes:
a fourth sending module, configured to send first information;
wherein the first information is used to indicate at least one of: a cell state transition of the first cell; the first cell does not send public information; the first cell transitions to not sending the public information; the first cell transitions to an inactive state; or the first cell transitions to an energy-saving state.

According to an aspect of the present disclosure, a terminal is provided, the terminal includes: a processor and a transceiver connected to the processor; wherein
the transceiver is configured to send an uplink request signal, or
the processor is configured to determine whether to send the uplink request signal, wherein the uplink request signal is used to request acquisition of public information of the first cell.

According to an aspect of the present disclosure, a terminal is provided, the terminal includes: a processor and a transceiver connected to the processor; wherein
the transceiver is configured to receive first information of the first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

According to an aspect of the present disclosure, a network device is provided, the network device includes: a processor and a transceiver connected to the processor; wherein
the transceiver is configured to receive an uplink request signal, wherein the uplink request signal is used to request acquisition of public information of the first cell.

According to an aspect of the present disclosure, a network device is provided, the network device includes: a processor and a transceiver connected to the processor; wherein
the transceiver is configured to receive first information of the first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

According to an aspect of the present disclosure, a terminal is provided, the terminal includes: a processor and a memory, wherein the memory stores at least one instruction, and the at least one instruction is loaded and executed by the processor to implement the method for cell communication according to the above aspect.

According to an aspect of the present disclosure, a network device is provided, the network device includes: a processor and a memory, wherein the memory stores at least one instruction, and the at least one instruction is loaded and executed by the processor to implement the method for cell communication according to the above aspect.

According to an aspect of the present disclosure, a computer-readable storage medium is provided, wherein the readable storage medium stores executable instructions, and the executable instructions are loaded and executed by a processor to enable a communication device to implement the method for cell communication according to the above aspect.

According to an aspect of the embodiments of the present disclosure, a chip is provided, the chip includes a programmable logic circuit and/or program instructions, and when the chip runs on a communication device, it is used to enable the communication device to implement the method for cell communication according to the above aspect.

According to an aspect of the present disclosure, a computer program product is provided, which, when run on a processor of a communication device, causes the communication device to execute the method for cell communication according to the above aspect.

The technical solution provided by the embodiments of the present disclosure at least includes the following beneficial effects:

By having the terminal send an uplink request signal to the network to request the first cell to send public information, so as to wake up the first cell to send public information (e.g., SIB1), and perform a communication procedure with the first cell based on the public information. Alternatively, for a first cell that does not send or does not actively send public information, the first cell can send first information to inform the terminal that the first cell does not send or does not actively send public information, so that the terminal can perform a communication procedure according to the situation wherein the first cell does not send or does not actively send public information. This method provides a working mode for a terminal in a cell that does not send or does not actively send public information, improving the communication procedure within a network energy-saving cell.

### BRIEF DESCRIPTION OF DRAWINGS

In order to more clearly illustrate the technical solutions in the embodiments of the present disclosure, the drawings required for description of the embodiments will be briefly introduced below. Obviously, the drawings in the following description are only some embodiments of the present disclosure. For those of ordinary skill in the art, other drawings can be obtained based on these drawings without creative work.
FIG. 1 is a schematic diagram of a communication system provided by an exemplary embodiment of the present disclosure;
FIG. 2 is a flowchart of a method for cell communication provided by an exemplary embodiment of the present disclosure;
FIG. 3 is a flowchart of a method for cell communication provided by an exemplary embodiment of the present disclosure;
FIG. 4 is a flowchart of a method for cell communication provided by an exemplary embodiment of the present disclosure;
FIG. 5 is a flowchart of a method for cell communication provided by an exemplary embodiment of the present disclosure;
FIG. 6 is a flowchart of a method for cell communication provided by an exemplary embodiment of the present disclosure;
FIG. 7 is a flowchart of a method for cell communication provided by an exemplary embodiment of the present disclosure;
FIG. 8 is a flowchart of a method for cell communication provided by an exemplary embodiment of the present disclosure;
FIG. 9 is a flowchart of a method for cell communication provided by an exemplary embodiment of the present disclosure;
FIG. 10 is a flowchart of a method for cell communication provided by an exemplary embodiment of the present disclosure;
FIG. 11 is a flowchart of a method for cell communication provided by an exemplary embodiment of the present disclosure;
FIG. 12 is a flowchart of a method for cell communication provided by an exemplary embodiment of the present disclosure;
FIG. 13 is a flowchart of a method for cell communication provided by an exemplary embodiment of the present disclosure;
FIG. 14 is a flowchart of a method for cell communication provided by an exemplary embodiment of the present disclosure;
FIG. 15 is a flowchart of a method for cell communication provided by an exemplary embodiment of the present disclosure;
FIG. 16 is a structural block diagram of a cell communication apparatus provided by an exemplary embodiment of the present disclosure;
FIG. 17 is a structural block diagram of a cell communication apparatus provided by an exemplary embodiment of the present disclosure;
FIG. 18 is a structural block diagram of a cell communication apparatus provided by an exemplary embodiment of the present disclosure;
FIG. 19 is a structural block diagram of a cell communication apparatus provided by an exemplary embodiment of the present disclosure; and
FIG. 20 is a structural schematic diagram of a communication device provided by an exemplary embodiment of the present disclosure.

### DETAILED DESCRIPTION

To make the objectives, technical solutions, and advantages of the present disclosure clearer, the following further describes the implementation modes of the present disclosure in detail with reference to the accompanying drawings.

The network architecture and service scenarios described in the embodiments of the present disclosure are for more clearly illustrating the technical solutions of the embodiments of the present disclosure, and do not constitute a limitation on the technical solutions provided by the embodiments of the present disclosure. Those of ordinary skill in the art will know that with the evolution of the network architecture and the emergence of new service scenarios, the technical solutions provided by the embodiments of the present disclosure are also applicable to similar technical problems.

It should be understood that the "indication" mentioned in the embodiments of the present disclosure may be a direct indication, an indirect indication, or an indication of an association relationship. For example, A indicating B may mean that A directly indicates B, for instance, B can be obtained through A; it may also mean that A indirectly indicates B, for instance, A indicates C, and B can be obtained through C; it may also mean that there is an association relationship between A and B.

In the description of the embodiments of the present disclosure, the term "correspondence" may indicate a direct correspondence or an indirect correspondence between two items, may also indicate an association relationship between two items, or may indicate a relationship such as indication and being indicated, configuration and being configured, etc.

In the embodiments of the present disclosure, "predefined" may be implemented by pre-storing corresponding codes, tables, or other means usable for indicating relevant information in a device (e.g., including a terminal and a network device), and the specific implementation method is not limited in the present disclosure. For example, predefined may refer to being defined in a protocol.

Currently, with people's pursuit of rate, latency, high mobility, energy efficiency, and the diversity and complexity of services in future life, the 3GPP (3rd Generation Partnership Project) international standards organization has begun to develop 5G (5th Generation Mobile Communication Technology). The main application scenarios of 5G are: Enhanced Mobile Broadband (eMBB), Ultra-Reliable Low-Latency Communications (URLLC), and Massive Machine Type Communication (mMTC).

eMBB still targets users obtaining multimedia content, services, and data, and its demand is growing very rapidly. On the other hand, since eMBB may be deployed in different scenarios, such as indoors, urban areas, rural areas, etc., its capabilities and requirements differ greatly, so it cannot be generalized and must be analyzed in detail in conjunction with specific deployment scenarios. Typical applications of URLLC include: industrial automation, power automation, remote medical operations (surgery), traffic safety assurance, etc. Typical characteristics of mMTC include: high connection density, small data volume, delay-insensitive services, low module cost, and long service life, etc.

NR (New Radio) can also be deployed independently. In order to reduce air interface signaling, quickly restore wireless connection, and quickly restore data services in a 5G network environment, a new RRC (Radio Resource Control) state is defined, namely the RRC INACTIVE state. This state is different from the RRC IDLE state and the RRC ACTIVE state.

RRC IDLE: Mobility is based on UE cell selection/reselection, paging is initiated by the CN (Core Network), and the paging area is configured by the CN. There is no UE AS (Access Stratum) context on the base station side. There is no RRC connection.

RRC CONNECTED: There is an RRC connection, and the base station and the UE have a UE AS context. The positioning of the UE by the network side is at a specific cell level. Mobility is mobility controlled by the network side. Unicast data can be transmitted between the UE and the base station.

RRC INACTIVE: Mobility is based on UE cell selection/reselection, there is a connection between CN and NR, the UE AS context exists on a certain base station, paging is triggered by the RAN (Radio Access Network), the RAN-based paging area is managed by the RAN, and the positioning of the UE by the network side is at the RAN paging area level.

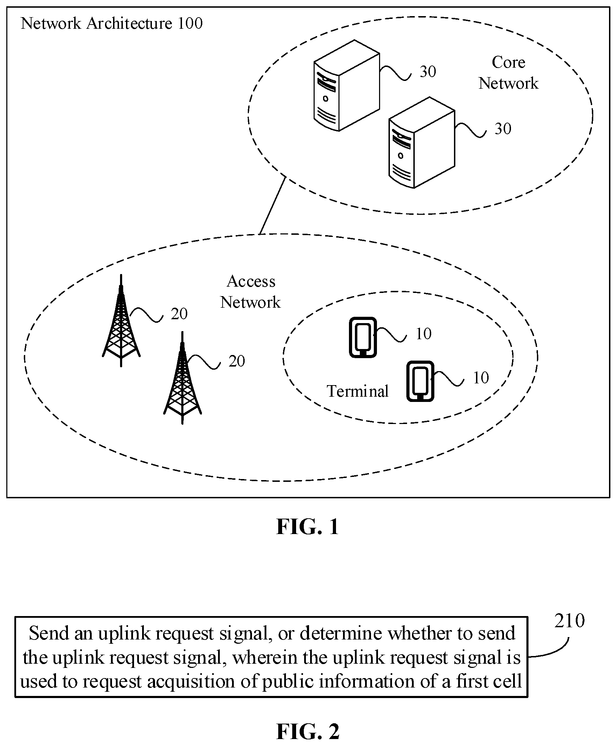

Please refer to FIG. 1, which shows a schematic diagram of a network architecture 100 provided by an embodiment of the present disclosure. The network architecture 100 may include: a terminal 10, an access network device 20, and a core network device 30.

The terminal 10 may refer to a User Equipment (UE), an access terminal, a subscriber unit, a subscriber station, a mobile station, a mobile station, a remote station, a remote terminal, a mobile device, a wireless communication device, a user agent, or a user device. Optionally, the terminal 10 may also be a cellular phone, a cordless phone, a Session Initiation Protocol (SIP) phone, a Wireless Local Loop (WLL) station, a Personal Digital Assistant (PDA), a handheld device with wireless communication capabilities, a computing device or other processing device connected to a wireless modem, an in-vehicle device, a wearable device, a terminal in a 5th Generation System (5GS), or a terminal in a future evolved Public Land Mobile Network (PLMN), etc., which is not limited in the embodiments of the present disclosure. For ease of description, the devices mentioned above are collectively referred to as terminals. The number of terminals 10 is usually multiple, and one or more terminals 10 may be distributed within the cell managed by each access network device 20.

The access network device 20 is a device deployed in the access network to provide wireless communication functions for the terminal 10. The access network device 20 may include various forms of macro base stations, micro base stations, relay stations, access points, and so on. In systems using different radio access technologies, the name of the device with access network device functionality may vary. For example, in a 5G NR system, it is called a gNodeB or gNB (next Generation Node B). As communication technology evolves, the name "access network device" may change. For ease of description, in the embodiments of the present disclosure, the above-mentioned devices providing wireless communication functions for the terminal 10 are collectively referred to as access network devices. Optionally, a communication relationship can be established between the terminal 10 and the core network device 30 through the access network device 20. Exemplarily, in a Long Term Evolution (LTE) system, the access network device 20 may be an Evolved Universal Terrestrial Radio Access Network (EUTRAN) or one or more eNodeBs in the EUTRAN; in a 5G NR system, the access network device 20 may be a Radio Access Network (RAN) or one or more gNBs in the RAN. In the embodiments of the present disclosure, unless otherwise specified, the term "network device" refers to the access network device 20, such as a base station.

The core network device 30 is a device deployed in the core network. The functions of the core network device 30 are mainly to provide user connection, user management, and service bearer, serving as a bearer network to provide an interface to an external network. For example, core network devices in a 5G NR system may include an Access and Mobility Management Function (AMF) entity, an Authentication Server Function (AUSF) entity, a User Plane Function (UPF) entity, a Session Management Function (SMF) entity, a Location Management Function (LMF) entity, a Policy Control Function (PCF) entity, a Unified Data Management (UDM) entity, and so on.

In an example, the access network device 20 and the core network device 30 communicate with each other via a certain interface technology, such as the NG interface in a 5G NR system. The access network device 20 and the terminal 10 communicate with each other via a certain air interface technology, such as the Uu interface.

The access network device is the access device through which the terminal accesses the network architecture wirelessly, and is mainly responsible for radio resource management on the air interface side, Quality of Service (QoS) management, data compression and encryption, etc. For example: base station NodeB, evolved base station eNodeB, base station in a 5G mobile communication system or New Radio (NR) communication system, base station in a future mobile communication system, etc.

Core network devices include Network Slice Selection Function (NSSF), Authentication Server Function (AUSF), Unified Data Management (UDM), Access and Mobility Management Function (AMF), Session Management Function (SMF), Policy Control Function (PCF), User Plane Function (UPF).

The UE connects to the (R) Access Network (AN) through the Uu interface for access layer connection, exchanging access layer messages and wireless data transmission. The UE connects to the AMF through the N1 interface for Non-Access Stratum (NAS) connection, exchanging NAS messages. The AMF is a mobility management function in the core network, and the SMF is a session management function in the core network. In addition to performing mobility management for the UE, the AMF is also responsible for forwarding session management-related messages between the UE and the SMF. The PCF is a policy management function in the core network, responsible for formulating policies related to mobility management, session management, charging, etc., for the UE. The PCF performs data transmission with an external Application Function (AF) through the N5 interface. The UPF is a user plane function in the core network, performing data transmission with an external Data Network (DN) through the N6 interface, and performing data transmission with the AN through the N3 interface.

The "5G NR system" in the embodiments of the present disclosure may also be referred to as a 5G system or an NR system, but those skilled in the art can understand its meaning. The technical solutions described in the embodiments of the present disclosure may be applicable to LTE systems, 5G NR systems, subsequent evolution systems of 5G NR, and may also be applicable to other communication systems such as Narrow Band Internet of Things (NB-IoT) systems, which is not limited in the present disclosure.

Please refer to FIG. 2, which shows a flowchart of a method for cell communication provided by an embodiment of the present disclosure. The method can be applied to a terminal. The method includes the following steps.

Step 210: Send an uplink request signal, or determine whether to send the uplink request signal, wherein the uplink request signal is used to request acquisition of public information of a first cell.

The uplink request signal may also be referred to as an uplink wake-up signal (UL WUS), a public information request signal, an SIB1 request signal, or an energy-saving wake-up signal.

The uplink request signal is used to request acquisition of public information of the first cell. Alternatively, the uplink request signal is used to request acquisition of SIB1 of the first cell. Alternatively, the uplink request signal is used to request waking up the first cell. Alternatively, the uplink request signal is used to request the first cell to exit the energy-saving state. Alternatively, the uplink request signal is used to request the first cell to exit the inactive state.

When the terminal needs to perform a communication procedure related to the first cell and the terminal has not acquired the public information of the first cell, the terminal may execute step 210 to send the uplink request signal, or determine whether to send the uplink request signal, so as to acquire the public information of the first cell to execute the communication procedure related to the first cell.

The first cell is a cell that does not send or does not actively send public information. Alternatively, the first cell is a cell that does not send or does not actively send SIB1. Alternatively, the first cell is a cell that does not send or does not actively send SIB (System Information Block).

Optionally, the first cell sends a Synchronization Signal Block (SSB), but does not send/does not actively send public information/SIB1/SIB.

The first cell may include at least one of: a SIB1 less cell, a Network Energy Saving (NES) cell, an inactive cell, an energy-saving cell, or a cell lacking public information.

Here, a cell in an inactive state/energy-saving state may be referred to as a SIB1 less cell, a NES cell, an inactive cell, an energy-saving cell, a cell lacking public information; or a cell supporting switching to an inactive state/energy-saving state may be referred to as a SIB1 less cell, a NES cell, an inactive cell, an energy-saving cell, a cell lacking public information.

Optionally, the first cell may have multiple cell states/network states, for example, the cell state/network state includes at least one of: active state, inactive state, energy-saving state, or non-energy-saving state.

Here, a cell in an active state or a non-energy-saving state may normally send public information/SIB1/SIB, or a cell in an active state or a non-energy-saving state may periodically send public information/SIB1/SIB. That is, the active state or non-energy-saving state means: the cell can normally send public signals/SIB1/SIB, or the cell can periodically send public signals/SIB1/SIB.

A cell in an inactive state/energy-saving state does not send public information/SIB1/SIB, or a cell in an inactive state/energy-saving state does not actively send public information/SIB1/SIB. That is, the inactive state/energy-saving state means: the cell does not send or does not actively send public signals/SIB1/SIB.

Optionally, the first cell is currently in an inactive state or an energy-saving state; or the first cell is preparing to switch from an active state/non-energy-saving state to an inactive state or an energy-saving state.

Optionally, the public information at least includes SIB1, or the public information at least includes SIB, or the public information at least includes SIB n, wherein n is a positive integer.

Optionally, the public information includes at least one of the following information of the first cell: cell selection parameters, SIB scheduling information, random access configuration, paging search space configuration, channel configuration, cell reselection parameters, intra-frequency neighbor cell information, or inter-frequency neighbor cell information.

Optionally, the public information includes at least one of the following parameters of the first cell: Public Land Mobile Network (PLMN) identifier, Tracking Area Code (TAC), minimum Reference Signal Received Power (RSRP), minimum RSRP offset value, maximum available uplink transmit power of the terminal, uplink/downlink ratio, special subframe format, operating frequency band indication, other SIB scheduling information, random access preamble power ramping step size, Discontinuous Reception (DRX) cycle, density of paging frames and paging occasions, time distribution of Physical Random Access Channel (PRACH), format of random access preamble, root index of the starting root sequence, Zone Config (ZC) phase cyclic shift length, number of contention-based Routing Areas (RAs), receiving window duration, initial random access preamble power, reference signal power, initial transmit power of Physical Uplink Shared Channel (PUSCH) terminal, initial transmit power of Physical Uplink Control Channel (PUCCH) terminal, parameters related to power setting, R criterion, minimum Reference Signal Received Quality (RSRQ), intra-frequency measurement start threshold, inter-frequency measurement start threshold, reselection duration, or low priority cell threshold.

Optionally, the terminal is in an RRC idle state, or the terminal is in an RRC inactive state.

Optionally, the terminal currently camps on the first cell (NES cell); or the terminal currently camps on an anchor cell of the first cell (a cell associated with the first cell); or the terminal currently camps on another cell, wherein the other cell is a cell other than the first cell and the anchor cell of the first cell.

Optionally, since the terminal cannot acquire the public information of the first cell, it cannot select the first cell to camp on; then the terminal camps on a cell according to at least one of the following methods: before the first cell sends the public information, not camping on the first cell; before the first cell sends the public information, camping on the anchor cell of the first cell; before the first cell sends the public information, camping on another cell; the other cell includes a cell other than the first cell and the anchor cell; before the first cell wakes up, not camping on the first cell; before the first cell wakes up, camping on the anchor cell of the first cell; before the first cell wakes up, camping on another cell; the other cell includes a cell other than the first cell and the anchor cell; after the first cell sends the public information, camping on the first cell; or after the first cell wakes up, camping on the first cell.

Alternatively, the terminal may also pre-camp on the first cell without acquiring the public information of the first cell, and then after acquiring the public information of the first cell, determine whether it can camp on the first cell. That is, the terminal may camp on the first cell before the first cell sends the public information; and/or, camp on the first cell after the first cell sends the public information; and/or, camp on the first cell before the first cell wakes up; and/or, camp on the first cell before the first cell wakes up.

Optionally, the terminal sends the uplink request signal to a target cell. The target cell may be at least one of: the first cell, the anchor cell of the first cell, or the camping cell of the terminal. Here, the camping cell of the terminal may be the first cell, the anchor cell of the first cell, or another cell. The other cell is a cell other than the first cell and the anchor cell of the first cell.

The anchor cell of the first cell is a cell associated with the first cell. The association relationship indication information between the first cell and the anchor cell may be predefined, or may be indicated by the cell last accessed by the terminal, or indicated by the last serving cell of the terminal, or indicated by the serving cell of the terminal, or indicated by the anchor cell of the first cell, or indicated by the camping cell of the terminal, or indicated by the first cell.

In summary, in the method provided by this embodiment, by having the terminal send an uplink request signal to the network to request the first cell to send public information, the first cell is woken up to send public information (e.g., SIB1), and the communication procedure with the first cell is performed based on the public information. This method provides a working mode for a terminal in a cell that does not send or does not actively send public information, improving the communication procedure within a network energy-saving cell.

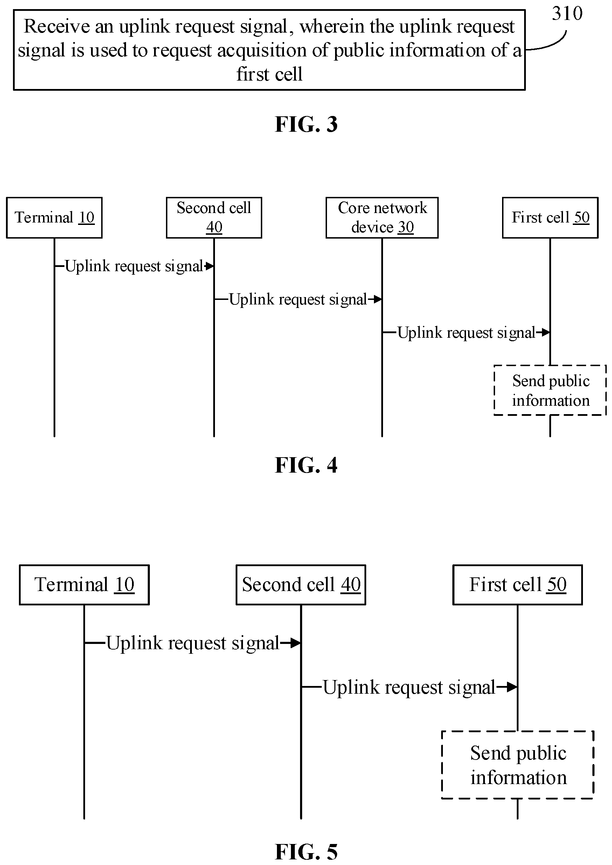

Please refer to FIG. 3, which shows a flowchart of a method for cell communication provided by an embodiment of the present disclosure. The method can be applied to a network device. The method includes the following step.

Step 310: Receive an uplink request signal, wherein the uplink request signal is used to request acquisition of public information of a first cell.

Optionally, this embodiment is performed by a network device, and the network device may be at least one of the following devices: an access network device of the first cell, an access network device of an anchor cell of the first cell, an access network device of a camping cell of the terminal, or a core network device.

Alternatively, the network device may be an access network device or a core network device of a target cell. The target cell includes at least one of: the first cell, the anchor cell of the first cell, the camping cell of the terminal, or another cell. The camping cell of the terminal may be the first cell, the anchor cell of the first cell, or another cell. The other cell is a cell other than the first cell and the anchor cell of the first cell.

Various situations of the network device are described below respectively.
(1) As shown in FIG. 4, the network device may be a core network device.

The terminal 10 sends an uplink request signal to an access network device of a second cell 40. The second cell 40 may be at least one of: an anchor cell of the first cell, a camping cell of the terminal, or another cell. The access network device of the second cell 40 reports the uplink request signal to the core network device 30. The core network device 30 forwards the uplink request signal to the access network device of the first cell 50.

Optionally, the core network device 30 may also send other signals/messages/indication information to the first cell 50 to instruct the first cell 50 to send public information. For example, the core network device 30 may send an uplink indication information to the first cell 50, wherein the uplink indication information is used to instruct the first cell to send public information/SIB1/SIB.

Optionally, the core network device 30 triggers the first cell 50 to send public information/SIB1/SIB.

(2) As shown in FIG. 5, the network device may be an access network device of a second cell other than the first cell (e.g., an anchor cell of the first cell, a camping cell of the terminal, or another cell).

The terminal 10 sends an uplink request signal to an access network device of a second cell 40. The second cell 40 may be at least one of: an anchor cell of the first cell, a camping cell of the terminal, or another cell. The access network device of the second cell 40 forwards the uplink request signal to the access network device of the first cell 50.

Optionally, the second cell 40 (the anchor cell of the first cell, the camping cell of the terminal, or another cell) triggers the first cell 50 to send public information/SIB1/SIB.

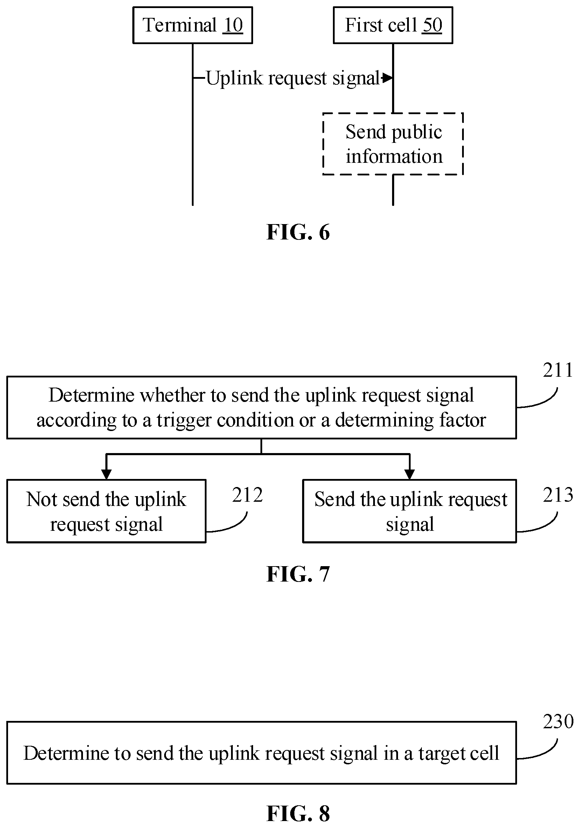

(3) As shown in FIG. 6, the network device may be an access network device of the first cell.

The terminal 10 sends an uplink request signal to the access network device of the first cell 50.

Optionally, the first cell 50 autonomously triggers the first cell 50 to send public information/SIB1/SIB.

Based on FIG. 4, FIG. 5, and FIG. 6 above, when the terminal sends the uplink request signal to the second cell, the terminal may send the uplink request signal to the second cell through a random access procedure. For example, the uplink request signal is carried in Msg1, Msg2, Msg3, or Msg4 of the random access procedure. Alternatively, the terminal may access the second cell and then send the uplink request signal to the second cell. Alternatively, the terminal may also send the uplink request signal to the second cell on a resource corresponding to a first pre-configuration.

Here, the first pre-configuration may be configuration information of the uplink request signal pre-received by the terminal, and the first pre-configuration is used to configure at least one of the following contents: time domain resource, frequency domain resource, preamble, physical random access resource, random access resource, or beam direction of the uplink request signal.

The first pre-configuration may be sent to the terminal by the anchor cell of the first cell, or sent to the terminal by the cell where the terminal currently camps, or sent to the terminal by a cell where the terminal historically camped, or sent to the terminal by the second cell, or predefined or pre-written in a protocol, or sent to the UE by the last cell serving the UE, or sent to the UE by the last cell where the UE camped, or sent to the UE by the NES cell via another cell, or sent to the UE by the NES cell (e.g., in an enhanced MIB or SSB, or other signal sent before Wake up). Optionally, the terminal saves the first pre-configuration.

Optionally, the first pre-configuration of the uplink request signal may be configured for the first cell, that is, the first pre-configuration is used to configure the uplink request signal of the first cell. When the terminal needs to request public information of the first cell, it uses the resource corresponding to the first pre-configuration to send the uplink request signal to the second cell. Optionally, the first pre-configuration may also be configured for all NES cells, that is, the first pre-configuration is used to configure the uplink request signal of NES cells. When the terminal needs to request public information of any NES cell, it can use the resource corresponding to the first pre-configuration to send the uplink request signal to the second cell. Optionally, the pre-configuration of the uplink request signal may also be configured for the second cell, that is, regardless of which NES cell the UE triggers, it can use the resource corresponding to the first pre-configuration to send the uplink request signal to the second cell.

Based on FIG. 4, FIG. 5, and FIG. 6 above, when the terminal sends the uplink request signal to the first cell, the terminal may send the uplink request signal to the first cell on a resource corresponding to a second pre-configuration.

Here, the second pre-configuration may be configuration information of the uplink request signal pre-received by the terminal, and the second pre-configuration is used to configure at least one of the following contents: time domain resource, frequency domain resource, preamble, physical random access resource, random access resource, or beam direction of the uplink request signal.

The second pre-configuration may be sent to the terminal by the anchor cell of the first cell, or sent to the terminal by the cell where the terminal currently camps, or sent to the terminal by a cell where the terminal historically camped, or predefined or pre-written in a protocol, or sent to the UE by the last cell serving the UE, or sent to the UE by the last cell where the UE camped, or sent to the UE by the NES cell via another cell, or sent to the UE by the NES cell (e.g., in an enhanced MIB or SSB, or other signal sent before Wake up). Optionally, the terminal saves the second pre-configuration.

Optionally, the second pre-configuration of the uplink request signal may be configured for the first cell, that is, the second pre-configuration is used to configure the uplink request signal of the first cell. When the terminal needs to request public information of the first cell, it uses the resource corresponding to the first pre-configuration to send the uplink request signal to the first cell. Optionally, the second pre-configuration may also be configured for all NES cells, that is, the second pre-configuration is used to configure the uplink request signal of NES cells. When the terminal needs to send an uplink request signal to any NES cell (e.g., the first cell), it can use the resource corresponding to the second pre-configuration to send the uplink request signal to the corresponding NES cell (e.g., the first cell).

Optionally, after receiving the uplink request signal, the first cell 50 sends public information/SIB1/SIB. Optionally, the first cell 50 may broadcast the public information/SIB1/SIB, or the first cell 50 may unicast the public information/SIB1/SIB to the terminal.

Optionally, the terminal receives the public information/SIB1/SIB sent by the first cell.

Optionally, the terminal receives the public information/SIB1/SIB sent by the first cell according to public information configuration/SIB1 configuration/SIB configuration. The public information configuration/SIB1 configuration/SIB configuration is used to indicate the time-frequency resources of the public information/SIB1/SIB.

Here, the public information configuration/SIB1 configuration/SIB configuration may be carried in the SSB of the first cell, that is, the first cell sends the SSB, and the terminal receives the public information/SIB1/SIB according to the public information configuration/SIB1 configuration/SIB configuration indicated in the SSB.

Alternatively, the public information configuration/SIB1 configuration/SIB configuration may be indicated to the terminal by the anchor cell of the first cell/the camping cell of the terminal/another cell/the core network device.

Alternatively, the public information configuration/SIB1 configuration/SIB configuration may be predefined.

In summary, in the method provided by this embodiment, by having the terminal send an uplink request signal to the network to request the first cell to send public information, the first cell is woken up to send public information (e.g., SIB1), and the communication procedure with the first cell is performed based on the public information. This method provides a working mode for a terminal in a cell that does not send or does not actively send public information, improving the communication procedure within a network energy-saving cell.

An exemplary embodiment in which a terminal determines whether to send an uplink request signal is provided.

Please refer to FIG. 7, which shows a flowchart of a method for cell communication provided by an embodiment of the present disclosure. The method can be applied to a terminal. Based on the embodiment shown in FIG. 2, step 210 includes step 211, step 212, and step 213.

Step 211: Determine whether to send the uplink request signal according to a trigger condition or a determining factor.

Here, the trigger condition or the determining factor is configured by the network, or is predefined, or is determined by the terminal.

Optionally, the terminal may receive configuration information of the trigger condition or the determining factor sent by the first cell/the anchor cell of the first cell/the camping cell of the terminal/another cell. Alternatively, the configuration information of the trigger condition or the determining factor is predefined by a communication protocol. Alternatively, the configuration information of the trigger condition or the determining factor is determined by a preset algorithm within the terminal.

Optionally, the trigger condition or the determining factor may be configured by a core network device. The trigger condition or the determining factor may also be configured by an access network device; for example, the access network device of the first cell, the access network device of the anchor cell of the first cell, the access network device of the camping cell of the terminal, the access network device of another cell, etc.

Optionally, the trigger condition includes at least one of: whether the first cell satisfies a cell selection condition; whether the first cell satisfies a cell reselection condition; the first cell satisfies a cell selection condition; the first cell satisfies a cell reselection condition; presence of uplink data to be sent; the data amount of the uplink data is greater than or equal to a data amount threshold; the network indicates or enables the terminal to send the uplink request signal; the terminal acquires the SSB of the first cell and does not acquire the SIB1 of the first cell; the terminal does not acquire the SIB1 of the first cell; the channel quality of the SSB of the first cell is greater than or equal to a quality threshold; the frequency priority of the first cell is higher than the frequency priority of another cell; the other cell includes the camping cell of the terminal; the network instructs the terminal to access the first cell; the network instructs the terminal to perform a random access procedure; the network instructs the terminal to send the uplink request signal; the terminal receives a paging message; the terminal needs to transmit downlink data; the network instructs the terminal to access the first cell; or the network instructs the terminal to send the uplink request signal in the first cell.

Optionally, the determining factor includes at least one of: the channel quality of the first cell; the RSRP of the first cell; the RSRQ of the first cell; a network slice supported by the first cell; a network slice supported by the frequency point of the first cell; a network slice required by the terminal; an allowed cell list; a disallowed cell list; data status of uplink data; data status of downlink data; paging information; reception status of the SSB of the first cell; reception status of the SIB1 of the first cell; the frequency priority of the first cell; the frequency priority of the camping cell of the terminal; the channel quality of the camping cell of the terminal; whether the first cell is excluded; first indication information, wherein the first indication information is used to indicate allowing the terminal to send the uplink request signal, or the first indication information is used to indicate disallowing the terminal to send the uplink request signal; second indication information, wherein the second indication information is used to indicate the camping cell of the terminal, or instruct the terminal to access the camping cell, or instruct the terminal to send the uplink request signal in the camping cell; third indication information, wherein the third indication information is used to indicate the access cell of the terminal, or instruct the terminal to send the uplink request signal in the access cell; or fourth indication information, wherein the fourth indication information is used to indicate a target cell, or instruct the terminal to send the uplink request signal in the target cell, or instruct the terminal to access the target cell.

Optionally, the terminal sends the uplink request signal when a first condition is satisfied; and does not send the uplink request signal when the first condition is not satisfied. Alternatively, the terminal sends the uplink request signal to a network device when the first condition is satisfied; the network device may be an access network device of a target cell.

Here, the first condition is related to the trigger condition or the determining factor. The first condition is set according to the trigger condition, and/or the first condition is set according to the determining factor. For example, the first condition may be set to satisfy at least one condition in the trigger condition, or the first condition may be set such that at least one parameter in the determining factor reaches a threshold value.

Optionally, the first condition is configured by the network, or is predefined, or is determined by the terminal.

Exemplarily, Table 1 gives examples of several first conditions.

**Table 1**

| Trigger Condition or Determining Factor | Example of First Condition |
|---|---|
| Parameters for cell selection or reselection, for example, including at least one of: intraFreqReselection, parameters required for S criterion, parameters required for R criterion, network slice supported by cell or frequency point, frequency priority, allowed cell list, or disallowed cell list, etc. | If the first cell satisfies the cell selection or reselection condition, then the UE considers the first condition satisfied, and/or sends the uplink request signal. |
| Data status, for example, whether data arrives, whether the data amount is greater than or equal to a first threshold. | If the UE has UL data arriving, or the data amount of the UL data is greater than or equal to the first threshold, the UE considers the first condition satisfied, and/or sends the uplink request signal. |
| Indication of whether the UE is allowed to send the uplink request signal. | For example: If the network allows the UE to send the uplink request signal, the UE may determine whether the first condition for the uplink request signal is satisfied, or consider the sending function of the uplink request signal enabled. |
| | For example: If the network allows the UE to send the uplink request signal, and the UE acquires the SSB of the first cell (further, based on the channel quality of the SSB being greater than or equal to a second threshold (e.g., RSRP, RSRQ, RSSI (Received Signal Strength Indicator), etc., being greater than or equal to the second threshold)) but does not acquire SIB1, then the UE considers the first condition satisfied, and/or sends the uplink request signal. |
| The UE acquires the SSB but does not acquire SIB1. | For example: The UE acquires the SSB of the first cell but does not acquire SIB1; or the UE acquires the SSB of the first cell, and based on the channel quality of the SSB being greater than or equal to a second threshold (e.g., RSRP, RSRQ, RSSI, etc., being greater than or equal to the second threshold) but does not acquire SIB1, then the UE considers the first condition satisfied, and/or sends the uplink request signal. For example: The channel quality of the cell where the UE currently camps is less than or equal to a third threshold, and the UE acquires the SSB of the first cell, and based on the channel quality of the SSB being greater than or equal to the second threshold (e.g., RSRP, RSRQ, RSSI, etc., being greater than or equal to the second threshold) but does not acquire SIB1, then the UE considers the first condition, and/or sends the uplink request signal. |
| Frequency priority, including the frequency priority of the first cell and/or the camping cell. | For example: The frequency priority of the first cell is higher than the frequency priority of another cell; or the frequency priority of the first cell is higher than the frequency priority of another cell, and the UE acquires the SSB of the first cell, and based on the channel quality of the SSB being greater than or equal to the second threshold (e.g., RSRP, RSRQ, RSSI, etc., being greater than or equal to the second threshold) but does not acquire SIB1, then the UE considers the first condition satisfied, and/or sends the uplink request signal. |
| | For example: The frequency priority of the cell where the UE currently camps is lower than the frequency priority of the first cell, and the UE acquires the SSB of the first cell, and based on the channel quality of the SSB being greater than or equal to the second threshold (e.g., RSRP, RSRQ, RSSI, etc., being greater than or equal to the second threshold) but does not acquire SIB1, then the UE considers the first condition satisfied, and/or sends the uplink request signal. |
| | For example: The frequency priority of the UE's camping cell is lower than the frequency priority of the first cell, and the UE acquires the SSB of the first cell, and based on the channel quality of the SSB being greater than or equal to the second threshold (e.g., RSRP, RSRQ, RSSI, etc., being greater than or equal to the second threshold) but does not acquire SIB1, then the UE considers the first condition satisfied, and/or sends the uplink request signal. |
| Determine whether to camp on/access another cell (or which cell), and/or trigger/send the uplink request signal in which cell based on network instruction. | For example: The base station instructs the UE to access another cell (e.g., the first cell), or send RACH (Random Access Channel), or send the uplink request signal, then the UE considers the first condition satisfied, and/or sends the uplink request signal. |
| | Further, this condition may be used in combination with other conditions. For example, the network instructs the UE to access the currently camped cell or another cell, or send RACH, or respond to paging via a paging message. |
| | For example: The network instructs the UE to send the uplink request signal in the current cell or in another cell via a paging message. |

Step 212: Not send the uplink request signal.

Optionally, the terminal does not send the uplink request signal when the first condition is not satisfied.

Optionally, the terminal may perform a first behavior when the first condition is not satisfied. The first behavior includes at least one of: entering an RRC idle state, for example, performing any one described in 3GPP TS (Technical Specification) 38.331 5.3.11; recording or indicating a failure cause value as failure to send the uplink request signal; stopping a first timer (T390 timer), wherein the first timer is used for a cell reselection procedure; performing at least one of UAC (Unified Access Control) behaviors, for example, performing any one described in 3GPP TS 38.331 5.3.14.4; performing at least one of RRC connection failure behaviors; or determining that a second timer times out, wherein the second timer is used for an RRC connection establishment procedure.

Here, the T390 timer is started after the UE receives an RRC connection release message, and is used to ensure that the UE has sufficient time to complete cell measurement and evaluation during the cell reselection procedure. When the UE fails to complete cell reselection during the T390 timer period, the T390 timer times out, and the UE releases radio resources and enters the idle state. The T300 timer is started when the UE initiates an RRC connection request, and is used to ensure that the UE has sufficient time to interact with the EUTRAN (Evolved Universal Terrestrial Radio Access Network) during the RRC connection establishment procedure. If the UE fails to complete RRC connection establishment during the T300 timer period, the UE releases radio resources and re-initiates the RRC connection request.

Step 213: Send the uplink request signal.

Optionally, the terminal sends the uplink request signal when the first condition is satisfied. Alternatively, the terminal sends the uplink request signal to a target cell when the first condition is satisfied.

In an optional embodiment, if the terminal does not trigger sending the uplink request signal, or sending the uplink request signal fails, or the response to the uplink request signal fails, the terminal may perform the first behavior.

That is, after step 210, the terminal may further execute at least one of the following steps:
when sending the uplink request signal fails, performing the first behavior;
when the first cell does not send the public information, performing the first behavior;
when the network does not indicate that the uplink request signal is successfully received, performing the first behavior; for example, when the target cell does not indicate that the uplink request signal is successfully received, performing the first behavior;
when the terminal determines that triggering the uplink request signal fails, performing the first behavior;
when the terminal determines that the uplink request signal request is unsuccessful, performing the first behavior; or
when the terminal determines that the uplink request signal request is not responded to, performing the first behavior.

Here, the first behavior includes at least one of: entering an RRC idle state, for example, performing any one described in 3GPP TS 38.331 5.3.11; recording or indicating a failure cause value as failure to send the uplink request signal; recording or indicating a failure cause value as failure to respond to the uplink request signal; stopping a first timer (T390 timer), wherein the first timer is used for a cell reselection procedure; performing at least one of UAC behaviors, for example, performing any one described in 3GPP TS 38.331 5.3.14.4; performing at least one of RRC connection failure behaviors; determining that a second timer (T300 timer) times out, wherein the second timer is used for an RRC connection establishment procedure; or performing at least one behavior of T300 timer timeout.

In summary, in the method provided by this embodiment, the terminal may determine whether to send the uplink request signal according to a trigger condition or a determining factor, send the uplink request signal to the network when the first condition is satisfied, and not send the uplink request signal when the first condition is not satisfied. In this way, the terminal can send the uplink request signal to the network to request the first cell to send public information, so as to wake up the first cell to send public information (e.g., SIB1), and perform a communication procedure with the first cell based on the public information. This method provides a working mode for a terminal in a cell that does not send or does not actively send public information, improving the communication procedure within a network energy-saving cell.

The method provided by this embodiment provides a processing method in case of failure to send the uplink request signal, improving the working mode of the terminal in a network energy-saving cell.

An exemplary embodiment in which a terminal determines to send an uplink request signal on a target cell is provided.

Please refer to FIG. 8, which shows a flowchart of a method for cell communication provided by an embodiment of the present disclosure. The method can be applied to a terminal. The method includes step 230.

Optionally, step 230 may also be implemented as an embodiment alone.

Optionally, step 230 may also be combined with the embodiment shown in FIG. 2 to form at least one embodiment. For example: the terminal determines to send the uplink request signal in a target cell; the terminal sends the uplink request signal to the target cell. Alternatively, the terminal determines to send the uplink request signal in a target cell; the terminal determines whether to send the uplink request signal; if it determines to send the uplink request signal, it sends the uplink request signal to the target cell; if it determines not to send the uplink request signal, it does not send the uplink request signal. Alternatively, the terminal determines whether to send the uplink request signal; if it determines to send the uplink request signal, it continues to determine to send the uplink request signal on the target cell; then it sends the uplink request signal to the target cell; if it determines not to send the uplink request signal, it does not send the uplink request signal.

Optionally, step 230 may be combined with at least one step in the embodiment shown in FIG. 7 to form at least one embodiment. Step 230 may be executed before step 211, or may be executed after step 211. For example, the terminal may execute step 230 to determine the target cell after determining that the first condition is satisfied. The terminal may also execute step 230 to determine the target cell after determining that the first condition is satisfied.

Step 230: Determine to send the uplink request signal in a target cell.

Here, the target cell is predefined, or the target cell is indicated by the network, or the target cell is determined by the terminal.

For example, the indication information of the target cell may be predefined in the communication protocol.

As another example, the last access cell (last serving cell) of the terminal may send the indication information of the target cell to the terminal (e.g., carried in an RRC connection release message, or carried in an RRC message, carried in system information, or carried in another message). Alternatively, the camping cell of the terminal may send the indication information of the target cell to the terminal (e.g., carried in system information, or carried in a message of the random access procedure). Alternatively, the anchor cell of the first cell may send the indication information of the target cell to the terminal (e.g., carried in system information, or carried in a message of the random access procedure). Alternatively, the first cell may send the indication information of the target cell to the terminal (e.g., carried in the SSB).

As another example, the target cell is determined according to a preset algorithm within the terminal.

Optionally, the target cell includes: the camping cell of the terminal, or the anchor cell of the first cell, or the first cell. Here, the camping cell of the terminal may include at least one of: the first cell, the anchor cell of the first cell, or another cell, wherein the other cell includes a cell other than the first cell and the anchor cell.

Optionally, the terminal may send the uplink request signal when the first condition is satisfied; or send the uplink request signal to the target cell; or send the uplink request signal to the target cell when the first condition is satisfied.

Optionally, when the terminal sends the uplink request signal to the second cell, the second cell may forward the uplink request signal to the first cell, so that the first cell responds to the uplink request signal. For example, the second cell may forward the uplink request signal to the first cell via the core network device, or the second cell may directly forward the uplink request signal to the first cell. The second cell includes the anchor cell of the first cell, the camping cell of the terminal, or another cell.

In summary, in the method provided by this embodiment, the terminal can send the uplink request signal to the target cell. The target cell may be the first cell, or may be a second cell other than the first cell, and the second cell forwards the uplink request signal to the first cell. Then, the first cell is requested to send public information, so as to wake up the first cell to send public information (e.g., SIB1), and the communication procedure with the first cell is performed based on the public information. This method provides a working mode for a terminal in a cell that does not send or does not actively send public information, improving the communication procedure within a network energy-saving cell.

An exemplary embodiment in which a terminal monitors a paging message of a first cell is provided.

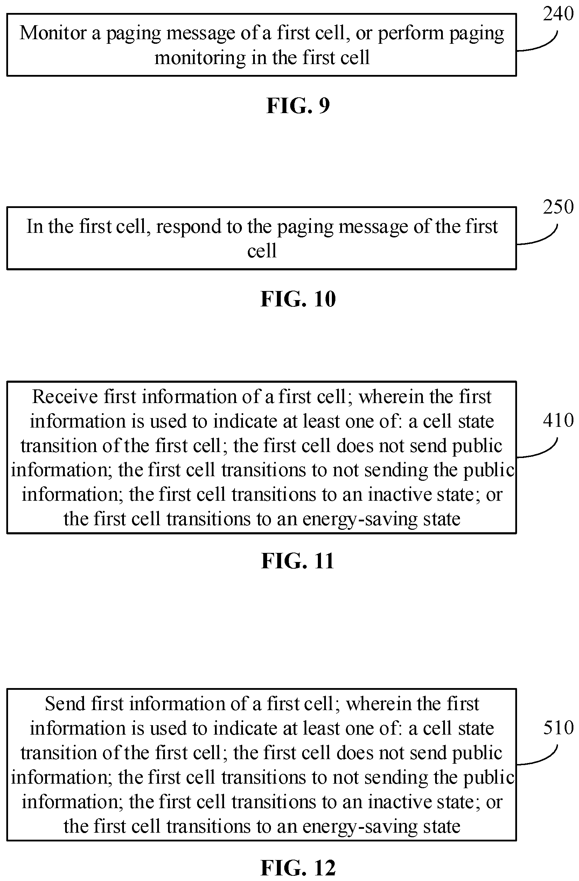

Please refer to FIG. 9, which shows a flowchart of a method for cell communication provided by an embodiment of the present disclosure. The method can be applied to a terminal. The method includes step 240.

Optionally, step 240 may also be implemented as an embodiment alone.

Optionally, step 240 may also be combined with the embodiment shown in FIG. 2 to form at least one embodiment. The execution order of the steps may be arbitrary.

Optionally, step 240 may be combined with at least one step in the embodiment shown in FIG. 7 to form at least one embodiment. The execution order of the steps may be arbitrary.

Optionally, step 240 may be combined with the embodiment shown in FIG. 8 to form at least one embodiment. The execution order of the steps may be arbitrary.

Step 240: Monitor a paging message of the first cell, or perform paging monitoring in the first cell.

Exemplarily, the embodiment of the present disclosure provides two types of methods for monitoring a paging message of the first cell: a first type: performing monitoring based on public information of the first cell; a second type: performing monitoring based on a first paging configuration. The terminal may monitor the paging message of the first cell through at least one of the two types of methods.

First type: The terminal monitors the paging message of the first cell based on the public information of the first cell; or monitors the paging message of the cell based on a paging search space configuration indicated by the first cell; the public information includes the paging search space configuration. Alternatively, performs paging monitoring in the first cell based on the public information of the first cell; or performs paging monitoring in the first cell based on the paging search space configuration indicated by the first cell.

Optionally, the public information of the first cell includes a paging search space configuration of the paging message, and the terminal may monitor the paging message of the first cell according to the time-frequency position indicated by the paging search space configuration.

Optionally, when using the first type of method for monitoring, the terminal needs to first receive the public information of the first cell. Here, the sending of the public information is triggered by at least one of the following devices: a core network device, an access network device of an anchor cell of the first cell, an access network device of a camping cell of the terminal, or an access network device of the first cell.

Optionally, the terminal may trigger the first cell to send the public information using the method provided in any of the embodiments shown in FIG. 2 to FIG. 8.

Second type: Monitor the paging message of the first cell according to a first paging configuration, or perform paging monitoring in the first cell according to the first paging configuration; wherein the first paging configuration includes at least one of: the first paging configuration is predefined; the first paging configuration is acquired from the last access cell of the terminal; the first paging configuration is acquired from the last serving cell of the terminal; the first paging configuration is acquired from the anchor cell of the first cell; or the first paging configuration is acquired from the camping cell of the terminal.

When using the second type of method for monitoring, the terminal may not need to acquire the public information of the first cell. Of course, the terminal may also have acquired the public information of the first cell, but the public information does not carry the paging search space configuration. Alternatively, the terminal may also have acquired the public information of the first cell, and the public information carries the paging search space configuration, but the priority of the first paging configuration is higher than that of the paging search space configuration, so the terminal preferentially uses the first paging configuration to monitor the paging message of the first cell.

The first paging configuration is used to configure the search space for the paging message of the first cell. The first paging configuration may be predefined by a communication protocol. Alternatively, the first paging configuration may be configured to the terminal by a network device. The network device may be at least one of: an access network device of the last access cell of the terminal, an access network device of the last serving cell of the terminal, an access network device of the anchor cell of the first cell, an access network device of the camping cell of the terminal, or a core network device.

Optionally, the terminal may first request to acquire the public information of the first cell. When the terminal acquires the public information of the first cell, the terminal may monitor the paging message of the first cell according to the public information. When the public information of the first cell is not acquired, the terminal may monitor the paging message of the first cell according to the first paging configuration.

For example, when the public information of the first cell is not acquired, the terminal may send a paging configuration acquisition request to the camping cell or the anchor cell of the first cell, wherein the paging configuration acquisition request is used to request acquisition of the first paging configuration. The camping cell or the anchor cell may send the first paging configuration to the terminal.

Alternatively, the first paging configuration is pre-acquired by the terminal (e.g., pre-configured to the terminal by the last access cell/last serving cell/anchor cell/camping cell), and when the public information of the first cell is not acquired, the terminal may directly use the first paging configuration to monitor the paging message of the first cell.

The terminal may also directly monitor the paging message of the first cell according to the first paging configuration without requesting to acquire the public information. That is, the terminal may not send the uplink request signal to request acquisition of the public information.

Correspondingly, the access network device of the first cell sends the paging message according to the public information. Alternatively, the access network device of the first cell sends the paging message according to the paging search space in the public information. Alternatively, the access network device of the first cell sends the paging message according to the first paging configuration.

In summary, in the method provided by this embodiment, the terminal may monitor the paging message of the first cell according to the public information of the first cell, and the terminal may also monitor the paging message of the first cell according to the first paging configuration. This method provides a working mode for a terminal in a cell that does not send or does not actively send public information, improving the communication procedure within a network energy-saving cell.

An exemplary embodiment in which a terminal responds to a paging message of a first cell is provided.

Please refer to FIG. 10, which shows a flowchart of a method for cell communication provided by an embodiment of the present disclosure. The method can be applied to a terminal. The method includes step 250.

Optionally, step 250 may also be implemented as an embodiment alone.

Optionally, step 250 may also be combined with the embodiment shown in FIG. 2 to form at least one embodiment. The execution order of the steps may be arbitrary.

Optionally, step 250 may be combined with at least one step in the embodiment shown in FIG. 7 to form at least one embodiment. The execution order of the steps may be arbitrary.

Optionally, step 250 may be combined with the embodiment shown in FIG. 8 to form at least one embodiment. The execution order of the steps may be arbitrary.

Optionally, step 250 may be combined with the embodiment shown in FIG. 9 to form at least one embodiment. Here, step 240 is executed before step 250. For example, the terminal may monitor the paging message according to the public information, and then respond to the paging message according to the public information. The terminal may also monitor the paging message according to the public information, and respond to the paging message according to a first random access configuration. The terminal may also monitor the paging message according to the first paging configuration, and respond to the paging message according to the public information. The terminal may also monitor the paging message according to the first paging configuration, and respond to the paging message according to the first random access configuration.

Step 250: In the first cell, respond to the paging message of the first cell.

Exemplarily, the embodiment of the present disclosure provides two types of methods for responding to a paging message of the first cell: a first type: responding based on public information of the first cell; a second type: responding based on a first random access configuration. The terminal may respond to the paging message of the first cell through at least one of the two types of methods.

First type: The terminal may respond to the paging message by performing at least one of the following methods:
respond to the paging message based on the public information of the first cell;
perform a random access procedure based on the public information of the first cell;
access the first cell based on the public information of the first cell;
respond to the paging message based on a random access configuration indicated by SIB1 in the public information;
perform a random access procedure based on the random access configuration indicated by SIB1 in the public information;
access the first cell based on the random access configuration indicated by SIB1 in the public information.

That is, the method for the terminal to respond to the paging message may include at least one of: sending a response message for the paging message to the first cell; performing a random access procedure to access the first cell; or accessing the first cell.

Optionally, the public information of the first cell includes a random access configuration, and the terminal may initiate a random access procedure to access the first cell according to the random access configuration. After accessing the first cell, the terminal may send a response message for the paging message to the first cell. Alternatively, the first cell may send a response message for the paging message to the first cell through a random access procedure according to the random access configuration.

Optionally, when using the first type of method for monitoring, the terminal needs to first receive the public information of the first cell. Here, the sending of the public information is triggered by at least one of the following devices: a core network device, an access network device of an anchor cell of the first cell, an access network device of a camping cell of the terminal, or an access network device of the first cell.

Optionally, the terminal may trigger the first cell to send the public information using the method provided in any of the embodiments shown in FIG. 2 to FIG. 8.

Second type: The terminal may respond to the paging message by performing at least one of the following methods:
responding to the paging message based on a first random access configuration;
performing a random access procedure based on the first random access configuration; or
accessing the first cell based on the first random access configuration.

Here, the first random access configuration includes at least one of: the first random access configuration which is predefined; the first random access configuration which is acquired from the last access cell of the terminal; the first random access configuration which is acquired from the last serving cell of the terminal; the first random access configuration which is acquired from the anchor cell of the first cell; or the first random access configuration which is acquired from the camping cell of the terminal.

When using the second type of method for responding to the paging message, the terminal may not need to acquire the public information of the first cell. Of course, the terminal may also have acquired the public information of the first cell, but the public information does not carry the random access configuration. Alternatively, the terminal may also have acquired the public information of the first cell, and the public information carries the random access configuration, but the priority of the first random access configuration is higher than that of the random access configuration in the public information, so the terminal preferentially uses the first random access configuration to respond to the paging message.

The first random access configuration is used to configure the random access resources of the first cell. The first random access configuration may be predefined by a communication protocol. Alternatively, the first random access configuration may be configured to the terminal by a network device. The network device may be at least one of: an access network device of the last access cell of the terminal, an access network device of the last serving cell of the terminal, an access network device of the anchor cell of the first cell, an access network device of the camping cell of the terminal, or a core network device.

Optionally, the terminal may first request to acquire the public information of the first cell. When the terminal acquires the public information of the first cell, the terminal may respond to the paging message of the first cell according to the public information. When the public information of the first cell is not acquired, the terminal may respond to the paging message of the first cell according to the first random access configuration.

For example, when the public information of the first cell is not acquired, the terminal may send a random access configuration acquisition request to the camping cell or the anchor cell of the first cell, wherein the random access configuration acquisition request is used to request acquisition of the first random access configuration. The camping cell or the anchor cell may send the first random access configuration to the terminal.

Alternatively, the first random access configuration is pre-acquired by the terminal (e.g., pre-configured to the terminal by the last access cell/last serving cell/anchor cell/camping cell), and when the public information of the first cell is not acquired, the terminal may directly use the first random access configuration to respond to the paging message of the first cell.

The terminal may also directly respond to the paging message of the first cell according to the first random access configuration without requesting to acquire the public information. That is, the terminal may not send the uplink request signal to request acquisition of the public information.

Correspondingly, the access network device of the first cell receives the response message for the paging message according to the public information. Alternatively, the access network device of the first cell receives the random access message of the terminal according to the public information. Alternatively, the access network device of the first cell receives the response message for the paging message according to the random access configuration in the public information. Alternatively, the access network device of the first cell receives the random access message of the terminal according to the random access configuration in the public information. Alternatively, the access network device of the first cell receives the response message for the paging message according to the first random access configuration. Alternatively, the access network device of the first cell receives the random access message of the terminal according to the first random access configuration.

In summary, in the method provided by this embodiment, the terminal may respond to the paging message of the first cell according to the public information of the first cell, and the terminal may also respond to the paging message of the first cell according to the first random access configuration. This method provides a working mode for a terminal in a cell that does not send or does not actively send public information, improving the communication procedure within a network energy-saving cell.

Optionally, referring to the embodiments shown in FIG. 2 to FIG. 10 above, when the first cell does not send or does not actively send public information, the first cell may not send indication information to the terminal to inform it of this situation.

At this time, the terminal may determine that the first cell does not send or does not actively send public information based on the monitoring status of the first cell (e.g., not receiving the public information of the first cell). The terminal may also determine that the first cell does not send or does not actively send public information based on the cell type of the first cell (e.g., the first cell is an NES cell or a SIB1 less cell). The terminal may also determine that the first cell does not send or does not actively send public information based on an indication from the camping cell of the terminal/the anchor cell of the first cell/another cell. The terminal may also communicate with the first cell directly based on an indication from the network side without determining whether the first cell does not send or does not actively send public information.

Furthermore, the first cell may also inform the terminal in advance that the first cell does not send or does not actively send public information. The following describes the scenario where the first cell informs the terminal in advance that it does not send or does not actively send public information.

Please refer to FIG. 11, which shows a flowchart of a method for cell communication provided by an embodiment of the present disclosure. The method can be applied to a terminal. The method includes the following steps.

Step 410: Receive first information of the first cell; wherein the first information is used to indicate at least one of: a cell state transition of the first cell; the first cell does not send public information; the first cell transitions to not sending the public information; the first cell transitions to an inactive state; or the first cell transitions to an energy-saving state.

Optionally, the terminal receives the first information sent by the first cell.

Exemplarily, the first information is carried by system information, or carried by a dedicated RRC message.

Optionally, the first cell supports cell state switching: it can switch from a non-energy-saving state to an energy-saving state; or switch from an active state to an inactive state; or switch from actively sending public information to not sending or not actively sending public information.

When the first cell is to perform a cell state switch, it may broadcast the first information so that terminals within the first cell learn about the cell state switch of the first cell. The first information is used to indicate the cell state switch of the first cell.

Optionally, the first information may include time information; wherein the time information includes at least one of: the time information used to indicate the cell state switch time of the first cell; the time information used to indicate the time when the first cell does not send public information; the time information used to indicate the time when the first cell transitions to not sending the public information; the time information used to indicate the time when the first cell is in the inactive state; or the time information used to indicate the time when the first cell is in the energy-saving state.

That is, the first cell may also inform the terminal of the time when it does not send or does not actively send public information via the first information. Here, the time information may be used to indicate at least one of: start time (time point), end time (time point), duration, time period, time offset corresponding to the start time, or time offset corresponding to the end time.

Then, after receiving the first information, the terminal may perform a communication procedure related to the first cell according to the first information.

Optionally, when the first cell undergoes another cell state switch, for example, switching from an energy-saving state to a non-energy-saving state; or switching from an inactive state to an active state; or switching from not sending or not actively sending public information to actively sending public information. The first cell may send third information again, wherein the third information is used to indicate at least one of: a cell state transition of the first cell; the first cell actively sends public information; the first cell transitions to actively sending public information; the first cell transitions to an active state; or the first cell transitions to a non-energy-saving state. The terminal receives the third information of the first cell.

In summary, in the method provided by this embodiment, for a first cell that does not send or does not actively send public information, the first cell can send first information to inform the terminal that the first cell does not send or does not actively send public information, so that the terminal can perform a communication procedure according to the situation where the first cell does not send or does not actively send public information. This method provides a working mode for a terminal in a cell that does not send or does not actively send public information, improving the communication procedure within a network energy-saving cell.

Please refer to FIG. 12, which shows a flowchart of a method for cell communication provided by an embodiment of the present disclosure. The method can be applied to an access network device of a first cell. The method includes the following steps.

Step 510: Send first information of the first cell; wherein the first information is used to indicate at least one of: a cell state transition of the first cell; the first cell does not send public information; the first cell transitions to not sending the public information; the first cell transitions to an inactive state; or the first cell transitions to an energy-saving state.

Optionally, after sending the first information, the first cell may perform at least one of the following methods: not sending public information; not actively sending public information; transitioning to not sending public information; transitioning to an inactive state; or transitioning to an energy-saving state.

In summary, in the method provided by this embodiment, for a first cell that does not send or does not actively send public information, the first cell can send first information to inform the terminal that the first cell does not send or does not actively send public information, so that the terminal can perform a communication procedure according to the situation where the first cell does not send or does not actively send public information. This method provides a working mode for a terminal in a cell that does not send or does not actively send public information, improving the communication procedure within a network energy-saving cell.

After receiving the first information, the terminal may also send second information to the first cell to negotiate the sending of public information with the first cell.

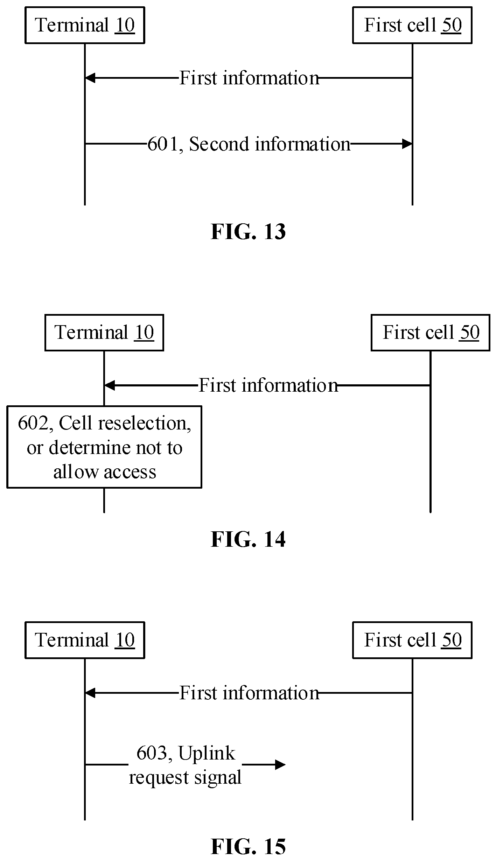

Please refer to FIG. 13, which shows a flowchart of a method for cell communication provided by an embodiment of the present disclosure. The method can be applied to a terminal and an access network device of a first cell. Based on the embodiment shown in FIG. 11 or FIG. 12, after sending/receiving the first information, step 601 may also be included.

Step 601: The terminal sends second information.

The terminal sends the second information to the first cell. The access network device of the first cell receives the second information sent by the terminal.

Here, the second information is used to indicate at least one of: requesting the first cell not to transition the cell state; requesting the first cell to send public information; requesting the first cell to continue sending public information; requesting the first cell not to enter the inactive state; requesting the first cell not to enter the energy-saving state; requesting the first cell to postpone entering the inactive state; requesting the first cell to postpone entering the energy-saving state; the terminal camps on the first cell; the inactive state time requested by the terminal; the non-energy-saving state time requested by the terminal; the active state time requested by the terminal; the energy-saving state time requested by the terminal; the time the terminal is located in the first cell; or the terminal is located within the coverage of the first cell.

That is, the terminal may request, via the second information, that the first cell not perform cell state switching, and request the first cell to continue actively sending public information.

The terminal may also indicate, via the second information, the expected time for not sending or not actively sending public information to the first cell (e.g., inactive state time, non-energy-saving state time, active state time, energy-saving state time). The expected time may include at least one of: expected start time (time point), expected end time (time point), expected time period, time offset corresponding to the expected start time, or time offset corresponding to the expected end time.

The terminal may also indicate, via the second information, the terminal status, wherein the terminal status may include the time the terminal is located in the first cell (start time, end time, time period, time offset, etc.), and the terminal status may also include that the terminal is currently located within the coverage of the first cell.

The first cell may adjust the cell state, or adjust the switching strategy of the cell state, according to the second information, so as to improve communication efficiency between the first cell and the terminal.

For example, when the second information is used to indicate requesting the first cell not to transition the cell state/requesting the first cell to send public information/requesting the first cell to continue sending public information/requesting the first cell not to enter the inactive state/requesting the first cell not to enter the energy-saving state/requesting the first cell to postpone entering the inactive state/the terminal camps on the first cell/the terminal is located within the coverage of the first cell, the first cell may not perform cell state switching within a first duration, and after the first duration ends, continue to send the first information to indicate performing cell state switching.

Alternatively, when the second information is used to indicate the inactive state time requested by the terminal/the non-energy-saving state time requested by the terminal/the active state time requested by the terminal/the energy-saving state time requested by the terminal/the time the terminal is located in the first cell, the first cell may perform cell state switching according to the time requested/indicated by the terminal.

Optionally, the terminal may determine whether to send the second information, and send the second information if it determines to send the second information, and not send the second information if it determines not to send the second information.

In summary, in the method provided by this embodiment, after receiving the first information, the terminal may send the second information to the first cell to request the first cell not to perform cell state switching, or request the first cell to perform cell state switching within an expected time, or indicate the current status of the terminal to the first cell. This allows the first cell to negotiate the network state of the first cell with the terminal, improving the communication effect between the first cell and the terminal.

After receiving the first information, the terminal may also perform cell reselection, or determine that the first cell is not allowed to be accessed or camped on or used.

Please refer to FIG. 14, which shows a flowchart of a method for cell communication provided by an embodiment of the present disclosure. The method can be applied to a terminal and an access network device of a first cell. Based on the embodiment shown in FIG. 11 or FIG. 12, after sending/receiving the first information, step 602 may also be included.

Step 602: When the terminal camps on the first cell, the terminal performs a cell reselection procedure; or reselects a camping cell for the terminal. Alternatively, the terminal determines that the first cell is not allowed to be accessed or camped on or used.

Optionally, that the first cell is not allowed to be accessed or camped on or used may mean: the first cell is not allowed to be accessed, not allowed to be camped on, or not allowed to be used. For example, the terminal determines that the first cell is unavailable, cannot be selected for camping, is barred, cannot be selected, cannot be reselected.

Alternatively, the terminal determines that the first cell is not allowed to be accessed or camped on or used within a second duration. The second duration may be 300 seconds.

Optionally, when the terminal learns that the first cell does not send or does not actively send public information, the terminal reselects to another cell to camp on, or reselects another cell to access.

For example, if the terminal currently camps on the first cell, after receiving the first information, the terminal cannot continue to camp on the first cell, so the terminal performs cell reselection to reselect to another cell to camp on.

In summary, in the method provided by this embodiment, after receiving the first information, the terminal may determine that the first cell is unavailable. If the terminal currently camps on the first cell, the terminal may reselect to another cell to camp on. This method provides a working mode for a terminal in a cell that does not send or does not actively send public information, improving the communication procedure within a network energy-saving cell.

After receiving the first information, the terminal may also send an uplink request signal to request acquisition of public information.

Please refer to FIG. 15, which shows a flowchart of a method for cell communication provided by an embodiment of the present disclosure. The method can be applied to a terminal and an access network device of a first cell. Based on the embodiment shown in FIG. 11 or FIG. 12, after sending/receiving the first information, step 603 may also be included.

Step 603: The terminal sends an uplink request signal, or determines whether to send the uplink request signal, wherein the uplink request signal is used to request acquisition of public information of the first cell.

Optionally, the terminal sends the uplink request signal when SIB1 of the first cell is not received; or determines whether to send the uplink request signal when SIB1 of the first cell is not received.

Exemplarily, the implementation method related to step 603 may refer to any of the embodiments shown in FIG. 2 to FIG. 10.

Optionally, the above steps 601, 602, and 603 may be arbitrarily combined to form new embodiments. Steps 601 and 602 may be combined to form a new embodiment. For example, the terminal sends the second information to the first cell and performs cell reselection.

Steps 601 and 603 may be combined to form a new embodiment. For example, the terminal sends the second information to the first cell and sends the uplink request signal to request public information.

Steps 602 and 603 may be combined to form a new embodiment. For example, the terminal sends the uplink request signal to request public information, and performs cell reselection if the request fails. Alternatively, the terminal performs cell reselection, and sends the uplink request signal to request public information if the cell reselection fails.

Steps 601, 602, and 603 may be combined to form a new embodiment. For example, the terminal sends the second information to the first cell, performs cell reselection, and sends the uplink request signal to request public information.

In summary, in the method provided by this embodiment, after receiving the first information, the terminal may send an uplink request signal to the network to request the first cell to send public information, so as to wake up the first cell to send public information (e.g., SIB1), and perform a communication procedure with the first cell based on the public information. This method provides a working mode for a terminal in a cell that does not send or does not actively send public information, improving the communication procedure within a network energy-saving cell.

Energy consumption has become an important component of operators' operating costs. According to a report by the GSMA, the energy cost of mobile networks accounts for approximately 23% of operators' total costs. Most of the energy consumption comes from the radio access network, especially active antenna units (AAU), while data centers and fiber optic transmission account for a smaller share.

Network power consumption includes two types:
- Dynamic part: e.g., consumption during data transmission/reception;
- Static part: e.g., consumption for maintaining the operation of necessary radio access equipment, even when there is no continuous data transmission/reception.

This study should not only assess the potential network energy consumption benefits but also evaluate and balance the impact on network and user performance. For example, there should not be a particularly large impact on certain KPIs (Key Performance Indicators), such as: spectrum efficiency, capacity, User Perceived Throughputs (UPT), latency, UE power consumption, complexity, handover performance, call drop rate, initial access performance, etc.

Possible research directions include:
1. Study procedures and signaling method(s) to support on-demand SIB1 for UEs in idle/inactive mode, including: [RAN1/2/3].
   - Triggering method by uplink wake-up-signal using an existing signal/channel.
   - Wake-up-signal configuration provisioning to UE.
      - Note: No modification of SSB will be discussed under this objective.
   - Information exchange between gNBs at least for the configuration of wake-up signal, if necessary.
   - Checkpoint for normative work in RAN#105.

The present disclosure is intended to solve how a UE works in a SIB1-less cell. A SIB1-less cell is a cell that sends an SSB but does not send or does not actively send SIB1.

Exemplarily, the uplink request signal may be UL WUS, the first cell may be an NES cell, and the public information may include SIB1. Exemplary embodiments applying the method provided by the present disclosure are provided below.

In an optional embodiment, a method for triggering and sending UL WUS is provided.
1. The UE determines whether it can trigger sending UL WUS, and/or, in which cell the UE sends the UL WUS message. Optionally, it includes at least one of:
   a) The condition for sending UL WUS is configured by the network, or predefined, or determined by the UE implementation;
   b) The cell in which UL WUS is sent is predefined or indicated by the network; or
   c) The conditions for sending UL WUS can be referred to in Table 1.
2. The UE sends the UL WUS message to the network. Optionally, it includes at least one of:
   a) The UE sends the UL WUS message to the network when the UL WUS sending condition is satisfied;
   b) The UL WUS message is used by the UE to request the NES cell to send public information, wherein the public information at least includes SIB1;
   c) The UL WUS message may be sent on the cell where the UE currently camps (e.g., the anchor cell of the NES cell), may also be sent on the anchor cell of the NES cell, or may be sent by the UE on the NES cell; or
   d) Optionally, if the UL WUS is sent to the currently camped cell or anchor cell (i.e., non-NES cell), the current base station forwards the demand information for SIB1 to the NES cell, or notifies the NES cell to send SIB1.
3. Optionally, if sending the UL WUS fails, or the NES cell does not send SIB1, or the network (NES or other cell) does not indicate successful reception of the UL WUS, or the UE considers the UL WUS failed or the request unsuccessful or the request not responded to, then the UE may perform the first behavior, wherein the first behavior includes at least one of:
   a) Perform behavior to enter RRC IDLE (e.g., any one described in 3GPP TS 38.331 5.3.11);
   b) Record or indicate the failure cause value as UL WUS sending failure, or response failure;
   c) Stop the T390 timer;
   d) Perform UAC behavior (e.g., at least one described in 3GPP TS 38.331 5.3.14.4);
   e) Perform at least one of RRC connection reject behaviors; or
   f) Consider the T300 timer timed out (further, execute at least one behavior of T300 timer timeout).

Extension scheme: For a SIB1-less NES cell (with SSB), regarding the processing of received/related downlink paging. In this case, how to monitor paging, or acquire SIB1 or request sending of SIB1, or how to respond to paging, may adopt one of the following methods:
1) Solution 1: The core network, or the base station of the anchor cell, or the base station of the cell where the UE currently camps, informs the NES cell to send SIB1. Further, the UE monitors paging based on the received SIB1.
2) Solution 2: Use a specific paging configuration to monitor paging messages of a cell with SSB but without SIB1. Further, the UE may request SIB1 of the NES cell to respond to paging or access the cell, or the UE may use specific PRACH (Physical Random Access Channel)/RACH resources to respond to paging or access the cell. Optionally, the specific paging configuration and/or (P)RACH resources are predefined.
3) Solution 3: The UE monitors paging in the NES cell. The configuration for paging monitoring is acquired through the last serving cell, or obtained from the anchor cell/the cell where the UE currently camps. Optionally, it is obtained through an RRC release message or system information. Further, the UE may request SIB1 of the NES cell to respond to paging or access the cell, or the UE may use specific PRACH/RACH resources to respond to paging or access the cell. Optionally, the specific PRACH/RACH resources may be acquired through the last serving cell, or obtained from the anchor cell/the cell where the UE currently camps. Optionally, it is obtained through an RRC release message or system information.

Extended Implementation Example 1: Referring to Table 2, before the NES cell wakes up (i.e., before SIB1 is sent), it cannot camp on the NES, or can only camp on the anchor cell or another cell. For example, the UE camps on the anchor cell or another cell before the NES cell wakes up. For example, the UE may camp on the NES cell after the NES cell wakes up.

**Table 2**

| | | |
|---|---|---|
| Camping | N.A. | Because SIB1 is missing, the anchor cell and the SIB1-less cell cannot be selected (reselected) |
| Cell Selection (Reselection) | N.A. | Because SIB1 is missing, SIB1-less cell cannot be selected (reselected). |
| Paging Message | N.A. | Because SIB1 is missing, the anchor cell and the SIB1-less cell cannot be selected (reselected). |
| RACH Configuration and Procedure | At the camping cell | Can be based on existing technology |
| UE is Notified of SIB1-less Cell | N.A. | The SIBx of the anchor cell includes: the relationship between the anchor cell and the NES cell, UL WUS configuration, conditions for triggering UL WUS, inactive state of the NES cell (UE knows that the NES cell lacks SIB1). |
| Conditions for Triggering UL WUS | N.A. | UL data: Under satisfying conditions, the UE sends UL WUS on demand to trigger the NES cell to send SIB1. It can send UL |
| | | WUS via the anchor cell or directly to the NES cell. (Downlink paging: The gNB of the anchor cell decides whether to activate SIB1 transmission of the NES cell.) |
| UL WUS Configuration | N.A. | From the SIBx of the anchor cell |
| Downlink Synchronization for Downlink SIB1-less Cell (for UL WUS) | Via SSB | Can be based on existing technology (e.g., technology in the current 3GPP protocol version). |
| Coexistence of Existing UEs | N.A. | Can be based on existing technology (e.g., technology in the current 3GPP protocol version), because SIB1 is missing, neither NES nor existing UEs can access/camp on the NES cell. |
| Abnormal Behavior | N.A. | UL WUS repetition or timer-based solution to determine whether activation is successful |

Extended Implementation Example 2: Referring to Table 3, the NES cell is camped on before the NES cell wakes up (i.e., before SIB1 is sent); the NES cell is camped on after the NES cell wakes up. For example, the UE pre-camps on the NES cell before the NES cell wakes up (i.e., before SIB1 is sent), and then finally camps on the NES cell based on the public information of the NES cell (e.g., at least one of the information included in SIB1), or determines whether to finally camp on the NES cell. As another example, when the UE discovers or detects the NES cell, it sends a wake-up request, and camps on the NES cell after the NES cell wakes up. As another example, the UE camps on the NES cell after the NES cell wakes up.

**Table 3**

| | | |
|---|---|---|
| Camping, Cell Selection (Reselection), Paging | Treat the NES cell as an NCD-SSB | There is no anchor cell concept, [the UE will rely solely on the SSB to camp, or trigger SIB1 via UL-WUS before camping]. |
| Obtaining NES Cell | N.A. | From the RRC release message of the |
| Information | | last cell [or pre-configuration], including: 1/NES cell information (SSB frequency, PCI, i.e., information transmitted from the NES cell SSB) 2/UL WUS configuration 3/Criteria for triggering UL WUS conditions 4/NES cell status (or UE autonomous observation). |
| UL WUS Procedure | N.A. | Based on UL-WUS trigger conditions, the UE sends UL WUS on demand to trigger the NES cell to send SIB1 |
| Abnormal Behavior | N.A. | UL WUS repetition or timer-based solution to ensure activation success. |

The above methods provide a procedure for how to trigger and send a UL WUS message, clarifying the UL WUS process.

In another optional embodiment, a method for handling SIB1 deactivation is provided.

Here, after the NES cell transitions to sending SIB1, or the cell is in a state of sending SIB1 but the cell wants to save energy, i.e., to deactivate SIB1, or not send SIB1, or not actively send SIB1, the processing method in this case is provided below.

Scheme 1 (Compared to Scheme 2, Scheme 1 involves an interaction process between the NES cell and the UE, ensuring that both the UE and the network know each other's next behavior or request , and perform related processing or judgment):
1. The NES cell indicates first information, wherein the first information is used to indicate that the NES cell does not send SIB1, or that the NES cell transitions to not sending SIB1, or that the NES cell transitions to an inactive state.
   a) Optionally, the first information is carried by system information, such as indicated via MIB (Master Information Block) or SIB1.
   b) Optionally, the first information may also indicate the time period of the inactive state or not sending SIB1 (including at least one of: start time, end time, or time period).
2. The UE receives the first information, and/or responds to the first information.
   a) For example: The UE sends second information to the network, wherein the second information is used to indicate to the network that the UE hopes the network state not to transition, or to send SIB1, or to continue sending SIB1, or not to enter inactive, or to postpone entering inactive (e.g., further, may indicate to the network: the time point/time period when the UE hopes the network can enter inactive), or that there is a UE present in this cell or camping on this cell. Optionally, before sending the second information, there may be a behavior for the UE to determine whether to send the second information.
   b) For example, the UE reselects to another cell, or considers the NES cell unavailable/cannot be camped on/barred/cannot be selected/cannot be reselected (further, considers the NES cell unavailable/cannot be camped on/barred/cannot be selected/cannot be reselected for 300 seconds or within said time period).
   c) For example, the UE sends a UL WUS message to request sending of SIB1 (for specific implementation, reference may be made to the embodiments described above).

Scheme 2:
1. The NES cell does not send SIB1, or transitions to not sending SIB1.
2. The UE sends a UL WUS message to request sending of SIB1. Alternatively, if the UE cannot receive SIB1, the UE sends a UL WUS message to request sending of SIB1 (for specific implementation, reference may be made to the embodiments described above).

The above methods provide behaviors in the case where the network does not want to send SIB1, which can ensure the performance of the UE and the network.

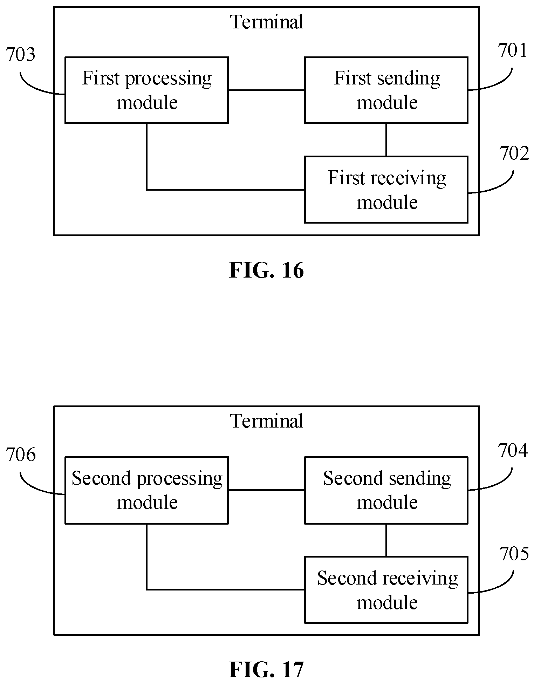

FIG. 16 shows a structural block diagram of a cell communication apparatus provided by an exemplary embodiment of the present disclosure. The apparatus can be implemented as a terminal, or as a part of a terminal. The apparatus includes:
a first sending module 701, configured to send an uplink request signal, or
a first processing module 703, configured to determine whether to send the uplink request signal. Here, the uplink request signal is used to request acquisition of public information of a first cell.

In an optional embodiment, the first sending module 701 is configured to determine whether to send the uplink request signal according to a trigger condition or a determining factor.

In an optional embodiment, the trigger condition or the determining factor is configured by the network, or is predefined, or is determined by the terminal.

In an optional embodiment, the trigger condition includes at least one of: whether the first cell satisfies a cell selection condition; whether the first cell satisfies a cell reselection condition; the first cell satisfies a cell selection condition; the first cell satisfies a cell reselection condition; presence of uplink data to be sent; the data amount of the uplink data is greater than or equal to a data amount threshold; the network indicates or enables the terminal to send the uplink request signal; the terminal acquires the SSB of the first cell and does not acquire the SIB1 of the first cell; the terminal does not acquire the SIB1 of the first cell; the channel quality of the SSB of the first cell is greater than or equal to a quality threshold; the frequency priority of the first cell is higher than the frequency priority of another cell; the other cell includes the camping cell of the terminal; the network instructs the terminal to access the first cell; the network instructs the terminal to perform a random access procedure; the network instructs the terminal to send the uplink request signal; the terminal receives a paging message; the terminal needs to transmit downlink data; the network instructs the terminal to access the first cell; or the network instructs the terminal to send the uplink request signal in the first cell.

In an optional embodiment, the determining factor includes at least one of: the channel quality of the first cell; the reference signal received power RSRP of the first cell; the reference signal received quality RSRQ of the first cell; a network slice supported by the first cell; a network slice supported by the frequency point of the first cell; a network slice required by the terminal; an allowed cell list; a disallowed cell list; data status of uplink data; data status of downlink data; paging information; reception status of the synchronization signal block SSB of the first cell; reception status of the system information block SIB1 of the first cell; the frequency priority of the first cell; the frequency priority of the camping cell of the terminal; the channel quality of the camping cell of the terminal; whether the first cell is excluded; first indication information, wherein the first indication information is used to indicate allowing the terminal to send the uplink request signal, or the first indication information is used to indicate disallowing the terminal to send the uplink request signal; second indication information, wherein the second indication information is used to indicate the camping cell of the terminal, or instruct the terminal to access the camping cell, or instruct the terminal to send the uplink request signal in the camping cell; third indication information, wherein the third indication information is used to indicate the access cell of the terminal, or instruct the terminal to send the uplink request signal in the access cell; or fourth indication information, wherein the fourth indication information is used to indicate a target cell, or instruct the terminal to send the uplink request signal in the target cell, or instruct the terminal to access the target cell.

In an optional embodiment, the first processing module 703 is configured to determine to send the uplink request signal in a target cell.

In an optional embodiment, the target cell is predefined, or the target cell is indicated by the network, or the target cell is determined by the terminal.

In an optional embodiment, the target cell includes: the camping cell of the terminal, or the anchor cell of the first cell, or the first cell.

In an optional embodiment, the apparatus includes at least one of:
the first sending module 701 configured to send the uplink request signal when a first condition is satisfied;
the first sending module 701 configured to send the uplink request signal to a target cell; or
the first sending module 701 configured to send the uplink request signal to the target cell when the first condition is satisfied.

In an optional embodiment, the first condition is related to a trigger condition or a determining factor.

In an optional embodiment, the first processing module 703 is configured to perform a first behavior when sending the uplink request signal fails;
the first processing module 703 is configured to perform the first behavior when the first cell does not send the public information;
the first processing module 703 is configured to perform the first behavior when the network does not indicate that the uplink request signal is successfully received;
the first processing module 703 is configured to perform the first behavior when the terminal determines that triggering the uplink request signal fails;
the first processing module 703 is configured to perform the first behavior when the terminal determines that the uplink request signal request is unsuccessful.
the first processing module 703 is configured to perform the first behavior when the terminal determines that the uplink request signal request is not responded to.

In an optional embodiment, the first behavior includes at least one of: entering a radio resource control RRC idle state; recording or indicating a failure cause value as failure to send the uplink request signal; recording or indicating a failure cause value as failure to respond to the uplink request signal; stopping a first timer, wherein the first timer is used for a cell reselection procedure; performing at least one of unified access control UAC behaviors; performing at least one of RRC connection failure behaviors; or determining that a second timer times out, wherein the second timer is used for an RRC connection establishment procedure.

In an optional embodiment, the apparatus includes a first receiving module 702.

The first receiving module 702 is configured to monitor a paging message of the first cell, or perform paging monitoring in the first cell.

In an optional embodiment, the first receiving module 702 is configured to monitor the paging message of the first cell based on the public information of the first cell; or monitor the paging message of the cell based on a paging search space configuration indicated by the first cell; the public information includes the paging search space configuration;

the first receiving module 702 is configured to perform paging monitoring in the first cell based on the public information of the first cell; or perform paging monitoring in the first cell based on the paging search space configuration indicated by the first cell.

In an optional embodiment, the first receiving module 702 is configured to monitor the paging message of the first cell according to a first paging configuration, or perform paging monitoring in the first cell according to the first paging configuration.

Here, the first paging configuration includes at least one of: the first paging configuration which is predefined; the first paging configuration which is acquired from the last access cell of the terminal; the first paging configuration which is acquired from the last serving cell of the terminal; the first paging configuration which is acquired from the anchor cell of the first cell; or the first paging configuration which is acquired from the camping cell of the terminal.

In an optional embodiment, the first processing module 703 is configured to, in the first cell, respond to the paging message of the first cell.

In an optional embodiment, responding to the paging message of the first cell includes at least one of: responding to the paging message based on the public information of the first cell; performing a random access procedure based on the public information of the first cell; accessing the first cell based on the public information of the first cell; responding to the paging message based on a random access configuration indicated by SIB1 in the public information; performing a random access procedure based on the random access configuration indicated by SIB1 in the public information; or accessing the first cell based on the random access configuration indicated by SIB1 in the public information.

In an optional embodiment, the apparatus includes a first receiving module 702.

The first receiving module 702 is configured to receive the public information sent by the first cell.

Here, the sending of the public information is triggered by at least one of the following devices: a core network device, an access network device of an anchor cell of the first cell, an access network device of the camping cell of the terminal, an access network device of the first cell.

In an optional embodiment, responding to the paging message of the first cell includes at least one of: responding to the paging message based on a first random access configuration; performing a random access procedure based on the first random access configuration; or accessing the first cell based on the first random access configuration. Here, the first random access configuration includes at least one of: the first random access configuration which is predefined; the first random access configuration which is acquired from the last access cell of the terminal; the first random access configuration which is acquired from the last serving cell of the terminal; the first random access configuration which is acquired from the anchor cell of the first cell; or the first random access configuration which is acquired from the camping cell of the terminal.

In an optional embodiment, the apparatus includes at least one of: the first processing module 703 configured to not camp on the first cell before the first cell sends the public information; the first processing module 703 configured to camp on an anchor cell of the first cell before the first cell sends the public information; the first processing module 703 configured to camp on another cell before the first cell sends the public information; the other cell includes a cell other than the first cell and the anchor cell; the first processing module 703 configured to not camp on the first cell before the first cell wakes up; the first processing module 703 configured to camp on the anchor cell of the first cell before the first cell wakes up; or the first processing module 703 configured to camp on the other cell before the first cell wakes up. The other cell includes a cell other than the first cell and the anchor cell; the first cell is camped on after the first cell sends the public information; the first cell is camped on after the first cell wakes up.

In an optional embodiment, the apparatus includes at least one of: the first processing module 703 configured to camp on the first cell before the first cell sends the public information; or the first processing module 703 configured to camp on the first cell after the first cell sends the public information.

In an optional embodiment, the public information includes SIB1.

In an optional embodiment, the first cell includes a network energy saving NES cell.

FIG. 17 shows a structural block diagram of a cell communication apparatus provided by an exemplary embodiment of the present disclosure. The apparatus can be implemented as a terminal, or as a part of a terminal. The apparatus includes a second receiving module 705.

The second receiving module 705 is configured to receive first information of the first cell.

Here, the first information is used to indicate at least one of: a cell state transition of the first cell; the first cell does not send public information; the first cell transitions to not sending the public information; the first cell transitions to an inactive state; or the first cell transitions to an energy-saving state.

In an optional embodiment, the first information is carried by system information, or carried by a dedicated RRC message.

In an optional embodiment, the first information includes time information.

Here, the time information includes at least one of: the time information used to indicate the cell state transition time of the first cell; the time information used to indicate the time when the first cell does not send the public information; the time information used to indicate the time when the first cell transitions to not sending the public information; the time information used to indicate the time when the first cell is in the inactive state; or the time information used to indicate the time when the first cell is in the energy-saving state.

In an optional embodiment, the apparatus includes a second sending module 704.

The second sending module 704 is configured to send second information. Here, the second information is used to indicate at least one of: requesting the first cell not to transition the cell state; requesting the first cell to send the public information; requesting the first cell to continue sending the public information; requesting the first cell not to enter the inactive state; requesting the first cell not to enter the energy-saving state; requesting the first cell to postpone entering the inactive state; requesting the first cell to postpone entering the energy-saving state; the terminal camps on the first cell; the inactive state time requested by the terminal; the non-energy-saving state time requested by the terminal; the active state time requested by the terminal; the energy-saving state time requested by the terminal; the time the terminal is located in the first cell; or the terminal is located within the coverage of the first cell.

In an optional embodiment, the apparatus includes a second processing module 706.

The second processing module 706 is configured to perform a cell reselection procedure when the terminal camps on the first cell; or the second processing module 706 is configured to reselect a camping cell for the terminal.

In an optional embodiment, the apparatus includes a second processing module 706.

The second processing module 706 is configured to determine that the first cell is not allowed to be accessed or camped on or used.

In an optional embodiment, the apparatus includes:
a second sending module 704, configured to send an uplink request signal, or
a second processing module 706, configured to determine whether to send the uplink request signal, wherein the uplink request signal is used to request acquisition of the public information of the first cell.

In an optional embodiment, the second sending module 704 is configured to send the uplink request signal when SIB1 of the cell is not received; or
the second processing module 706 is configured to determine whether to send the uplink request signal when SIB1 of the cell is not received.

In an optional embodiment, the public information includes SIB1.

In an optional embodiment, the first cell includes a network energy saving NES cell.

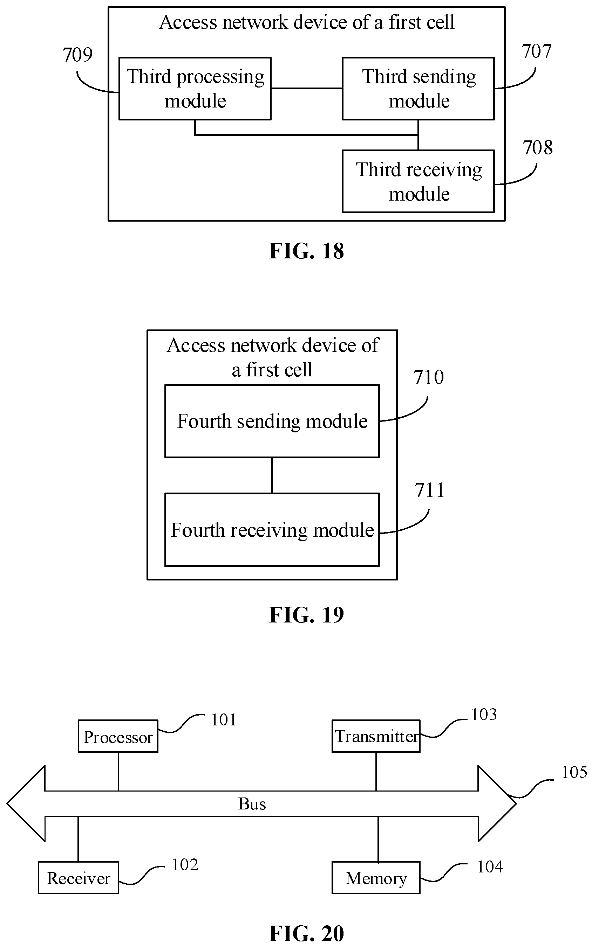

FIG. 18 shows a structural block diagram of a cell communication apparatus provided by an exemplary embodiment of the present disclosure. The apparatus can be implemented as a network device, or as a part of a network device. The network device may be an access network device of a first cell. The apparatus includes:
a third receiving module 708, configured to receive an uplink request signal, wherein the uplink request signal is used to request acquisition of public information of the first cell.

In an optional embodiment, receiving the uplink request signal includes at least one of: receiving the uplink request signal forwarded by a camping cell of a terminal; receiving the uplink request signal forwarded by an anchor cell of the first cell; receiving the uplink request signal sent by a core network; or receiving the uplink request signal sent by the terminal.

In an optional embodiment, the apparatus includes a third sending module 707.

The third sending module 707 is configured to send public information.

Here, the sending of the public information is triggered by at least one of the following devices: a core network device, an access network device of an anchor cell of the first cell, an access network device of a camping cell of a terminal, or an access network device of the first cell.

In an optional embodiment, the apparatus includes at least one of: a third sending module 707, configured to send a paging message according to the public information; or a third sending module 707, configured to send a paging message according to a paging search space configuration indicated in the public information.

In an optional embodiment, the apparatus includes at least one of: a third sending module 707, configured to send the paging message according to a first paging configuration.

Here, the first paging configuration includes at least one of: the first paging configuration which is predefined; the first paging configuration which is sent by a last access cell of a terminal; the first paging configuration which is sent by a last serving cell of the terminal; the first paging configuration which is sent by an anchor cell of the first cell; or the first paging configuration which is sent by a camping cell of the terminal.

In an optional embodiment, the apparatus includes at least one of: a third processing module 709, configured to not send the public information; a third processing module 709, configured to not actively send the public information; a third processing module 709, configured to transition to not sending the public information; a third processing module 709, configured to transition to an inactive state; or a third processing module 709, configured to transition to an energy-saving state.

In an optional embodiment, the public information includes SIB1.

In an optional embodiment, the first cell includes a network energy saving NES cell.

FIG. 19 shows a structural block diagram of a cell communication apparatus provided by an exemplary embodiment of the present disclosure. The apparatus can be implemented as a network device, or as a part of a network device. The network device may be an access network device of a first cell. The apparatus includes a fourth sending module 710.

The fourth sending module 710 is configured to send first information.

Here, the first information is used to indicate at least one of: a cell state transition of the first cell; the first cell does not send public information; the first cell transitions to not sending the public information; the first cell transitions to an inactive state; or the first cell transitions to an energy-saving state.

In an optional embodiment, the first information is carried by system information, or carried by a dedicated RRC message.

In an optional embodiment, the first information includes time information.

Here, the time information includes at least one of: the time information used to indicate the cell state transition time of the first cell; the time information used to indicate the time when the first cell does not send the public information; the time information used to indicate the time when the first cell transitions to not sending the public information; the time information used to indicate the time when the first cell is in the inactive state; or the time information used to indicate the time when the first cell is in the energy-saving state.

In an optional embodiment, the apparatus includes a fourth receiving module 711.

The fourth receiving module 711 is configured to receive second information. Here, the second information is used to indicate at least one of: requesting the first cell not to transition the cell state; requesting the first cell to send the public information; requesting the first cell to continue sending the public information; requesting the first cell not to enter the inactive state; requesting the first cell not to enter the energy-saving state; requesting the first cell to postpone entering the inactive state; requesting the first cell to postpone entering the energy-saving state; a terminal camps on the first cell; the inactive state time requested by the terminal; the non-energy-saving state time requested by the terminal; the active state time requested by the terminal; the energy-saving state time requested by the terminal; or the time the terminal is located in the first cell; the terminal is located within the coverage of the first cell.

In an optional embodiment, the apparatus includes a fourth receiving module 711.

The fourth receiving module 711 is configured to receive an uplink request signal, wherein the uplink request signal is used to request acquisition of the public information of the first cell.

In an optional embodiment, the public information includes SIB1.

In an optional embodiment, the first cell includes a network energy saving NES cell.

FIG. 20 shows a schematic structural diagram of a communication device (terminal or network device) provided by an exemplary embodiment of the present disclosure. The communication device includes: a processor 101, a receiver 102, a transmitter 103, a memory 104, and a bus 105.

The processor 101 includes one or more processing cores. The processor 101 executes various functional applications and information processing by running software programs and modules.

The receiver 102 and the transmitter 103 can be implemented as a communication component, which can be a communication chip, and can be referred to as a transceiver.

The memory 104 is connected to the processor 101 via the bus 105.

The memory 104 may be used to store at least one instruction, and the processor 101 is used to execute the at least one instruction to implement the various steps in the above method embodiments.

Furthermore, the memory 104 can be implemented by any type of volatile or non-volatile storage device or a combination thereof, the volatile or non-volatile storage device includes but is not limited to: a magnetic disk or an optical disk, an Electrically-Erasable Programmable Read Only Memory (EEPROM), an Erasable Programmable Read Only Memory (EPROM), a Static Random Access Memory (SRAM), a Read-Only Memory (ROM), a magnetic memory, a flash memory, a Programmable Read-Only Memory (PROM).

Here, when the communication device is implemented as a terminal, the processor and the transceiver in the communication device involved in the embodiments of the present disclosure can perform the steps performed by the terminal in any of the above methods, which will not be repeated here.

In a possible implementation, when the communication device is implemented as a terminal, the transceiver is configured to send an uplink request signal, or the processor is configured to determine whether to send the uplink request signal, wherein the uplink request signal is used to request acquisition of public information of the first cell.

In another possible implementation, when the communication device is implemented as a terminal, the transceiver is configured to receive first information of the first cell.

Here, the first information is used to indicate at least one of: a cell state transition of the first cell; the first cell does not send public information; the first cell transitions to not sending the public information; the first cell transitions to an inactive state; or the first cell transitions to an energy-saving state.

In another possible implementation, when the communication device is implemented as an access network device of a first cell, the transceiver is configured to receive an uplink request signal, wherein the uplink request signal is used to request acquisition of public information of the first cell.

In another possible implementation, when the communication device is implemented as an access network device of a first cell, the transceiver is configured to receive first information of the first cell.

Here, the first information is used to indicate at least one of: a cell state transition of the first cell; the first cell does not send public information; the first cell transitions to not sending the public information; the first cell transitions to an inactive state; or the first cell transitions to an energy-saving state.

In an exemplary embodiment, a computer-readable storage medium is also provided, wherein the computer-readable storage medium stores at least one instruction, at least one program, a code set, or an instruction set, and the at least one instruction, the at least one program, the code set, or the instruction set is loaded and executed by a processor to implement the method for cell communication performed by a communication device provided in the above various method embodiments.

In an exemplary embodiment, a chip is also provided, the chip includes a programmable logic circuit and/or program instructions, and when the chip runs on a communication device, it is used to enable the communication device to implement the method for cell communication according to the above aspect.

In an exemplary embodiment, a computer program product is also provided, which, when run on a processor of a communication device, causes the communication device to execute the method for cell communication according to the above aspect.

A person of ordinary skill in the art can understand that all or part of the steps for implementing the above embodiments can be completed by hardware, or can be completed by instructing relevant hardware through a program. The program can be stored in a computer-readable storage medium. The storage medium mentioned above can be a read-only memory, a magnetic disk, or an optical disk, etc.

The above descriptions are only optional embodiments of the present disclosure and are not intended to limit the present disclosure. Any modifications, equivalent substitutions, improvements, etc., made within the spirit and principle of the present disclosure shall be included in the protection scope of the present disclosure.

## Claims

1. A method for cell communication, wherein the method is performed by a terminal, and the method comprises:
sending an uplink request signal, or determining whether to send the uplink request signal, wherein the uplink request signal is used to request acquisition of public information of a first cell.

2. The method according to claim 1, wherein the determining whether to send the uplink request signal comprises:
determining whether to send the uplink request signal according to a trigger condition or a determining factor.

3. The method according to claim 2, wherein the trigger condition or the determining factor is configured by a network, or is predefined, or is determined by the terminal.

4. The method according to claim 2 or 3, wherein the trigger condition comprises at least one of: whether the first cell satisfies a cell selection condition; whether the first cell satisfies a cell reselection condition; the first cell satisfies a cell selection condition; the first cell satisfies a cell reselection condition; presence of uplink data to be sent; a data amount of the uplink data is greater than or equal to a data amount threshold; a network indicates or enables the terminal to send the uplink request signal; the terminal acquires a synchronization signal block (SSB) of the first cell and does not acquire a system information block 1 (SIB1) of the first cell; the terminal does not acquire the SIB1 of the first cell; channel quality of the SSB of the first cell is greater than or equal to a quality threshold; a frequency priority of the first cell is higher than a frequency priority of another cell; the another cell comprises a camping cell of the terminal; the network instructs the terminal to access the first cell; the network instructs the terminal to perform a random access procedure; the network instructs the terminal to send the uplink request signal; the terminal receives a paging message; the terminal needs to transmit downlink data; the network instructs the terminal to access the first cell; or the network instructs the terminal to send the uplink request signal in the first cell.

5. The method according to any one of claims 2 to 4, wherein the determining factor comprises at least one of: channel quality of the first cell; reference signal received power (RSRP) of the first cell; reference signal received quality (RSRQ) of the first cell; a network slice supported by the first cell; a network slice supported by a frequency point of the first cell; a network slice required by the terminal; an allowed cell list; a disallowed cell list; data status of uplink data; data status of downlink data; paging information; reception status of the SSB of the first cell; reception status of the SIB1 of the first cell; a frequency priority of the first cell; a frequency priority of a camping cell of the terminal; channel quality of the camping cell of the terminal; whether the first cell is excluded; first indication information, wherein the first indication information is used to indicate allowing the terminal to send the uplink request signal, or the first indication information is used to indicate disallowing the terminal to send the uplink request signal; second indication information, wherein the second indication information is used to indicate the camping cell of the terminal, or instruct the terminal to access the camping cell, or instruct the terminal to send the uplink request signal in the camping cell; third indication information, wherein the third indication information is used to indicate an access cell of the terminal, or instruct the terminal to send the uplink request signal in the access cell; or fourth indication information, wherein the fourth indication information is used to indicate a target cell, or instruct the terminal to send the uplink request signal in the target cell, or instruct the terminal to access the target cell.

6. The method according to any one of claims 1 to 5, comprising: determining to send the uplink request signal in a target cell.

7. The method according to claim 6, wherein the target cell is predefined, or the target cell is indicated by a network, or the target cell is determined by the terminal.

8. The method according to claim 6 or 7, wherein the target cell comprises: a camping cell of the terminal, or an anchor cell of the first cell, or the first cell.

9. The method according to any one of claims 1 to 8, wherein the sending the uplink request signal comprises at least one of:
sending the uplink request signal when a first condition is satisfied;
sending the uplink request signal to a target cell; or
sending the uplink request signal to the target cell when the first condition is satisfied.

10. The method according to claim 9, wherein the first condition is related to a trigger condition or a determining factor.

11. The method according to any one of claims 1 to 10, further comprising at least one of:
when sending the uplink request signal fails, performing a first behavior;
when the first cell does not send the public information, performing the first behavior;
when a network does not indicate that the uplink request signal is successfully received, performing the first behavior;
when the terminal determines that triggering the uplink request signal fails, performing the first behavior;
when the terminal determines that the uplink request signal request is unsuccessful, performing the first behavior; or
when the terminal determines that the uplink request signal request is not responded to, performing the first behavior.

12. The method according to claim 11, wherein the first behavior comprises at least one of: entering a radio resource control (RRC) idle state; recording or indicating a failure cause value as failure to send the uplink request signal; recording or indicating a failure cause value as failure to respond to the uplink request signal; stopping a first timer, wherein the first timer is used for a cell reselection procedure; performing at least one of unified access control (UAC) behaviors; performing at least one of RRC connection failure behaviors; determining that a second timer times out, wherein the second timer is used for an RRC connection establishment procedure.

13. The method according to any one of claims 1 to 12, comprising:
monitoring a paging message of the first cell, or performing paging monitoring in the first cell.

14. The method according to claim 13, wherein the monitoring the paging message of the first cell comprises:
monitoring the paging message of the first cell based on the public information of the first cell; or monitoring the paging message of the cell based on a paging search space configuration indicated by the first cell; the public information comprises the paging search space configuration;
the performing paging monitoring in the first cell comprises:
performing paging monitoring in the first cell based on the public information of the first cell; or performing paging monitoring in the first cell based on the paging search space configuration indicated by the first cell.

15. The method according to claim 13, wherein the monitoring the paging message of the first cell, or performing paging monitoring in the first cell comprises:
monitoring the paging message of the first cell according to a first paging configuration, or performing paging monitoring in the first cell according to the first paging configuration;
wherein the first paging configuration comprises at least one of: the first paging configuration is predefined; the first paging configuration is acquired from a last access cell of the terminal; the first paging configuration is acquired from a last serving cell of the terminal; the first paging configuration is acquired from an anchor cell of the first cell; or the first paging configuration is acquired from a camping cell of the terminal.

16. The method according to any one of claims 1 to 15, wherein the method comprises:
in the first cell, responding to a paging message of the first cell.

17. The method according to claim 16, wherein the responding to the paging message of the first cell comprises at least one of: responding to the paging message based on the public information of the first cell; performing a random access procedure based on the public information of the first cell; accessing the first cell based on the public information of the first cell; responding to the paging message based on a random access configuration indicated by SIB1 in the public information; performing a random access procedure based on the random access configuration indicated by SIB1 in the public information; or accessing the first cell based on the random access configuration indicated by SIB1 in the public information.

18. The method according to claim 14 or 17, comprising:
receiving the public information sent by the first cell;
wherein sending of the public information is triggered by at least one of a core network device, an access network device of an anchor cell of the first cell, an access network device of a camping cell of the terminal, or an access network device of the first cell.

19. The method according to claim 16, wherein the responding to the paging message of the first cell comprises at least one of: responding to the paging message based on a first random access configuration; performing a random access procedure based on the first random access configuration; or accessing the first cell based on the first random access configuration;
wherein the first random access configuration comprises at least one of: the first random access configuration which is predefined; the first random access configuration which is acquired from a last access cell of the terminal; the first random access configuration which is acquired from a last serving cell of the terminal; the first random access configuration which is acquired from an anchor cell of the first cell; or the first random access configuration which is acquired from a camping cell of the terminal.

20. The method according to any one of claims 1 to 19, comprising at least one of:
before the first cell sends the public information, not camping on the first cell;
before the first cell sends the public information, camping on an anchor cell of the first cell;
before the first cell sends the public information, camping on another cell; wherein the another cell comprises a cell other than the first cell and the anchor cell;
before the first cell wakes up, not camping on the first cell;
before the first cell wakes up, camping on the anchor cell of the first cell;
before the first cell wakes up, camping on the another cell; wherein the another cell comprises a cell other than the first cell and the anchor cell;
after the first cell sends the public information, camping on the first cell; or
after the first cell wakes up, camping on the first cell.

21. The method according to any one of claims 1 to 19, comprising at least one of:
before the first cell sends the public information, camping on the first cell;
after the first cell sends the public information, camping on the first cell;
before the first cell wakes up, camping on the first cell; or
before the first cell wakes up, camping on the first cell.

22. The method according to any one of claims 1 to 21, wherein the public information comprises system information block 1 (SIB1).

23. The method according to any one of claims 1 to 22, wherein the first cell comprises a network energy saving (NES) cell.

24. A method for cell communication, wherein the method is performed by a terminal, and the method comprises:
receiving first information of a first cell;
wherein the first information is used to indicate at least one of: a cell state transition of the first cell; the first cell does not send public information; the first cell transitions to not sending the public information; the first cell transitions to an inactive state; the first cell transitions to an energy-saving state.

25. The method according to claim 24, wherein the first information is carried by system information, or carried by a dedicated Radio Resource Control (RRC) message.

26. The method according to claim 24 or 25, wherein the first information comprises time information;
wherein the time information comprises at least one of: the time information used to indicate a cell state transition time of the first cell; the time information used to indicate a time when the first cell does not send the public information; the time information used to indicate a time when the first cell transitions to not sending the public information; the time information used to indicate a time when the first cell is in the inactive state; or the time information used to indicate a time when the first cell is in the energy-saving state.

27. The method according to any one of claims 24 to 26, comprising:
sending second information, wherein the second information is used to indicate at least one of: requesting the first cell not to transition a cell state; requesting the first cell to send the public information; requesting the first cell to continue sending the public information; requesting the first cell not to enter the inactive state; requesting the first cell not to enter the energy-saving state; requesting the first cell to postpone entering the inactive state; requesting the first cell to postpone entering the energy-saving state; the terminal camps on the first cell; an inactive state time requested by the terminal; a non-energy-saving state time requested by the terminal; an active state time requested by the terminal; an energy-saving state time requested by the terminal; a time the terminal is located in the first cell; or the terminal is located within a coverage of the first cell.

28. The method according to any one of claims 24 to 27, comprising:
when the terminal camps on the first cell, performing a cell reselection procedure; or
reselecting a camping cell of the terminal.

29. The method according to any one of claims 24 to 28, comprising:
determining that the first cell is not allowed to be accessed or camped on or used.

30. The method according to any one of claims 24 to 29, comprising:
sending an uplink request signal, or determining whether to send the uplink request signal, wherein the uplink request signal is used to request acquisition of the public information of the first cell.

31. The method according to claim 30, wherein the sending the uplink request signal, or determining whether to send the uplink request signal comprises:
sending the uplink request signal when System Information Block 1 (SIB1) of the first cell is not received; or
determining whether to send the uplink request signal when the SIB1 of the first cell is not received.

32. The method according to any one of claims 24 to 31, wherein the public information comprises System Information Block 1 (SIB1).

33. The method according to any one of claims 1 to 32, wherein the first cell comprises a network energy saving (NES) cell.

34. A method for cell communication, wherein the method is performed by an access network device of a first cell, and the method comprises:
receiving an uplink request signal, wherein the uplink request signal is used to request acquisition of public information of the first cell.

35. The method according to claim 34, wherein the receiving the uplink request signal comprises at least one of:
receiving the uplink request signal forwarded by a camping cell of a terminal;
receiving the uplink request signal forwarded by an anchor cell of the first cell;
receiving the uplink request signal sent by a core network; or
receiving the uplink request signal sent by the terminal.

36. The method according to claim 34 or 35, comprising:
sending public information;
wherein sending of the public information is triggered by at least one of: a core network device, an access network device of an anchor cell of the first cell, an access network device of a camping cell of a terminal, or an access network device of the first cell.

37. The method according to claim 36, comprising at least one of:
sending a paging message according to the public information; or
sending a paging message according to a paging search space configuration indicated in the public information.

38. The method according to claim 34 or 35, comprising:
sending a paging message according to a first paging configuration;
wherein the first paging configuration comprises at least one of: the first paging configuration which is predefined; the first paging configuration which is sent by a last access cell of a terminal; the first paging configuration which is sent by a last serving cell of the terminal; the first paging configuration which is sent by an anchor cell of the first cell; the first paging configuration which is sent by a camping cell of the terminal.

39. The method according to any one of claims 34 to 38, comprising at least one of:
not sending the public information; not actively sending the public information; transitioning to not sending the public information; transitioning to an inactive state; transitioning to an energy-saving state.

40. The method according to any one of claims 34 to 39, wherein the public information comprises System Information Block 1 (SIB1).

41. The method according to any one of claims 34 to 40, wherein the first cell comprises a network energy saving (NES) cell.

42. A method for cell communication, wherein the method is performed by an access network device of a first cell, and the method comprises:
sending first information;
wherein the first information is used to indicate at least one of: a cell state transition of the first cell; the first cell does not send public information; the first cell transitions to not sending the public information; the first cell transitions to an inactive state; or the first cell transitions to an energy-saving state.

43. The method according to claim 42, wherein the first information is carried by system information, or carried by a dedicated Radio Resource Control (RRC) message.

44. The method according to claim 42 or 43, wherein the first information comprises time information;
wherein the time information comprises at least one of: the time information used to indicate a cell state transition time of the first cell; the time information used to indicate a time when the first cell does not send the public information; the time information used to indicate a time when the first cell transitions to not sending the public information; the time information used to indicate a time when the first cell is in the inactive state; or the time information used to indicate a time when the first cell is in the energy-saving state.

45. The method according to any one of claims 42 to 44, comprising:
receiving second information, wherein the second information is used to indicate at least one of: requesting the first cell not to transition a cell state; requesting the first cell to send the public information; requesting the first cell to continue sending the public information; requesting the first cell not to enter the inactive state; requesting the first cell not to enter the energy-saving state; requesting the first cell to postpone entering the inactive state; requesting the first cell to postpone entering the energy-saving state; a terminal camps on the first cell; an inactive state time requested by the terminal; a non-energy-saving state time requested by the terminal; an active state time requested by the terminal; an energy-saving state time requested by the terminal; a time the terminal is located in the first cell; or the terminal is located within a coverage of the first cell.

46. The method according to any one of claims 42 to 45, comprising:
receiving an uplink request signal, wherein the uplink request signal is used to request acquisition of the public information of the first cell.

47. The method according to any one of claims 42 to 46, wherein the public information comprises System Information Block 1 (SIB1).

48. The method according to any one of claims 42 to 47, wherein the first cell comprises a network energy saving (NES) cell.

49. An apparatus for cell communication, comprising:
a first sending module, configured to send an uplink request signal, or
a first processing module, configured to determine whether to send the uplink request signal, wherein the uplink request signal is used to request acquisition of public information of a first cell.

50. An apparatus for cell communication, comprising:
a second receiving module, configured to receive first information of a first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

51. An apparatus for cell communication, comprising:
a third receiving module, configured to receive an uplink request signal, wherein the uplink request signal is used to request acquisition of public information of a first cell.

52. An apparatus for cell communication, comprising:
a fourth sending module, configured to send first information;
wherein the first information is used to indicate at least one of: a cell state transition of a first cell; the first cell does not send public information; the first cell transitions to not sending the public information; the first cell transitions to an inactive state; or the first cell transitions to an energy-saving state.

53. A terminal, comprising: a processor and a transceiver connected to the processor; wherein
the transceiver is configured to send an uplink request signal, or
the processor is configured to determine whether to send the uplink request signal, wherein the uplink request signal is used to request acquisition of public information of a first cell.

54. A terminal, comprising: a processor and a transceiver connected to the processor; wherein
the transceiver is configured to receive first information of a first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

55. A network device, comprising: a processor and a transceiver connected to the processor; wherein
the transceiver is configured to receive an uplink request signal, wherein the uplink request signal is used to request acquisition of public information of a first cell.

56. A network device, comprising: a processor and a transceiver connected to the processor; wherein
the transceiver is configured to receive first information of a first cell;
wherein the first information is used to indicate at least one of: a cell state transition of the first cell; the first cell does not send public information; the first cell transitions to not sending the public information; the first cell transitions to an inactive state; or the first cell transitions to an energy-saving state.

57. A terminal, comprising: a processor and a memory, wherein the memory stores at least one instruction, and the at least one instruction is loaded and executed by the processor to implement the method for cell communication according to any one of claims 1 to 33.

58. A network device, comprising: a processor and a memory, wherein the memory stores at least one instruction, and the at least one instruction is loaded and executed by the processor to implement the method for cell communication according to any one of claims 34 to 48.

59. A computer-readable storage medium having stored thereon executable instructions that when loaded and executed by a processor, enable a communication device to implement the method for cell communication according to any one of claims 1 to 48.

60. A chip, comprising a programmable logic circuit or a program, wherein a communication device, on which the chip is installed, is used to implement the method for cell communication according to any one of claims 1 to 48.
